(19) Europäisches Patentamt
European Patent Office
Office européen des brevets

(11) **EP 3 877 192 B1**

(12) # EUROPEAN PATENT SPECIFICATION

(45) Date of publication and mention of the grant of the patent:
**24.04.2024 Bulletin 2024/17**

(21) Application number: **19804786.2**

(22) Date of filing: **07.11.2019**

(51) International Patent Classification (IPC):
***B42D 25/324*** *(2014.01)*

(52) Cooperative Patent Classification (CPC):
**B42D 25/324**

(86) International application number:
**PCT/GB2019/053150**

(87) International publication number:
**WO 2020/095049 (14.05.2020 Gazette 2020/20)**

(54) **METHODS OF MANUFACTURING SECURITY DEVICE COMPONENTS**

VERFAHREN ZUR HERSTELLUNG VON BESTANDTEILEN EINER SICHERHEITSVORRICHTUNG

PROCÉDÉS DE FABRICATION DE COMPOSANTS DE DISPOSITIFS DE SÉCURITÉ

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **08.11.2018 GB 201818207**

(43) Date of publication of application:
**15.09.2021 Bulletin 2021/37**

(73) Proprietor: **De La Rue International Limited
Basingstoke, Hampshire RG22 4BS (GB)**

(72) Inventor: **HOLMES, Brian William
Fleet Hampshire GU51 5HZ (GB)**

(74) Representative: **Gill Jennings & Every LLP
The Broadgate Tower
20 Primrose Street
London EC2A 2ES (GB)**

(56) References cited:
**EP-A1- 3 255 468 WO-A1-2016/191817**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 877 192 B1

## Description

### FIELD OF THE INVENTION

The invention relates to methods of manufacturing security device components suitable for use in security devices that may be provided in or on security documents, such as banknotes, identity documents, passports, certificates and the like.

### BACKGROUND TO THE INVENTION

To prevent counterfeiting and enable authenticity to be checked, security documents are typically provided with one or more security devices which are difficult or impossible to replicate accurately with commonly available means, particularly photocopiers, scanners or commercial printers.

Many conventional security elements utilise optically active structures to produce optical effects that cannot be replicated with standard printing techniques. In particular, it is common in the art to use colour-generating structures to provide optical effects. Commonly used colour-generating structures include diffractive optically variable effect generating relief structures, such as diffraction gratings, which generate coloured optically variable effects by their surface structure. Another type of optically active structure that may be incorporated into security devices is the relatively recently developed plasmonic nanostructures. Plasmonic nanostructures are structures that generate colour from the resonant interactions between light and metallic nanostructures where collective free-electron oscillations within the metallic nanostructure coupled to electromagnetic fields in a neighbouring dielectric material. These structures are described in detail in: "Plasmonic Color Palettes for Photorealistic Printing with Aluminum Nanostructures", Shawn J. Tan et al., Nano Letters, 2014, 14 (7), pp 4023-4029, DOI: 10.1021/nl501460x; and "Color generation via subwavelenght plasmonic nanostructures", Yinghong Gu et al., Nanoscale, 2015, 7, pp 6409-6419, DOI: 10.1039/C5NR00578G; and "Plasmonic colour generation", Anders Kristensen et al., Nat. Rev. Mater. 2, 16088, (2016), pp 1-14, DOI: 10.1038/natrevmats.2016.88.

Plasmonic nanostructures are capable of generating colour in a manner that is not governed solely by the periodicity of the surface structure, as is the case with conventional dispersive grating structures governed by the diffraction equation:

$$\frac{\lambda}{d} = \sin\alpha \pm \sin\beta$$

where $\lambda$ is wavelength of incident light, d is the width of a slit, $\alpha$ is the angle of incidence and $\beta$ is the angle of first order diffraction. As they are able to generate colour without using diffraction, plasmonic nanostructures can be substantially optically invariable, meaning that white light at substantially any angle of incidence will generate substantially the same colour for a particular viewing angle, and the colour may remain substantially unchanged with viewing angle. However, in some cases, the shape and symmetry of the of the plasmonic nanostructures may be controlled so as to provide a more restricted viewing angle range along one or both axes of tilt. In such cases, the colour will remain substantially unchanged with viewing angle, but the plasmonic effect may cease being distinguishable beyond certain angles, relative to the direction of specular reflection.

Since plasmonic nanostructures produce substantially invariable colour effects, they can be used to replicate a colour print. Plasmonic nanostructures offer advantages over colour prints that they can produce much higher resolution imagery owing to the nanoscale of the individual structure elements, and they can form multiple colours intrinsically in register with one another since all structure elements are typically formed in a single process, whereas in printing, multiple colours are usually printed down in separate printing steps.

While it is desirable to implement these plasmonic nanostructures in security devices, the art is lacking in suitable processes for conveniently integrating these structures into the manufacturing process for security devices. In particular, these structures require a metallised dielectric layer and this poses problems with regards to metallising the areas of the plasmonic nanostructures without necessarily metallising all other areas of the security element. It is therefore an object of the present invention to seek improved methods for manufacturing security device components that comprise these plasmonic nanostructures.

EP 3 255 468 A1 discloses a method according to the preamble of claim 1 and a display body that includes a first surface, a second surface, a first optical component, and a second optical component. The first surface includes a first optical surface and a second optical surface. First light is incident on the first surface from an observation side. The second surface is located opposite to the observation side with respect to the first surface. Second light is incident on the second surface from a side opposite to the observation side with respect to the second surface. The first optical component includes the first optical surface and forms first information, which is displayed on the observation side, from the first light received on the first optical surface. The second optical component includes the second optical surface. The second optical component receives the second light transmitted through the second surface, forms second information, which is displayed on the observation side, from the second light, and emits the second information from the second optical surface.

### SUMMARY OF THE INVENTION

In accordance with a first aspect of the present invention, there is provided a method of manufacturing a security device component comprising: providing a dielectric substrate, the substrate having a first surface defining a relief structure, wherein the relief structure comprises an array of plasmonic nanostructure elements, the array of plasmonic nanostructure elements defining raised portions and recessed portions of the first surface, and an array of reduced-metallising relief elements, the array of reduced-metallising relief elements defining inclined portions of the first surface having an inclination relative to the plane of the substrate greater than the inclination of the raised portions and/or the recessed portions of the first surface; and directionally coating the first surface of the substrate with a metal layer such that the metal layer coating the raised portions and/or the recessed portions of the first surface defined by the array of plasmonic nanostructure elements is thicker than any metal layer coating the inclined portions of the first surface defined by the array of reduced-metallising relief elements, wherein the inclined portions of the first surface and the directional coating are such that any metal layer coating the inclined portions of the first surface has a thickness of less than 15 nm measured perpendicular to the surface at any point; and/or further comprising etching the metal layer coated on the first surface such that any metal layer is substantially removed from the inclined portions of the first surface and remains on the raised portions and/or the recessed portions, thereby maintaining the array of functioning plasmonic nanostructures.

This method uses an array of reduced-metallising relief elements comprising inclined surface element portions that reduce the average thickness of a directionally coated metal layer across the array and hence provide that the raised and recessed portions of the plasmonic nanostructure elements are more metallised that the reduced-metallising relief elements. As will be described in more detail below, the inclined portions of the first surface defined by the reduced-metallising relief elements need not be planar facets and can have a more curved profile. They will, however, be composed of relatively steep surfaces that ensure that the average thickness of the metal layer is reduced across the array of relief elements. By reducing the thickness of the metal layer in regions away from the plasmonic nanostructure elements, it is possible to ensure that the plasmonic nanostructure regions are the most visually striking regions of the security element and are not competing with a highly reflective metal layer in non-plasmonic regions.

Preferably, the inclined portions of the first surface and the directional coating are such that any metal layer coating the inclined portions of the first surface has a thickness of less than 10 nm, preferably less than 7 nm, measured perpendicular to the surface at any point. In some embodiments, the inclined portions of the first surface and the directional coating are such that any metal layer coating the inclined portions of the first surface is at least partially transparent. That is, the metal layer deposited on the array of reduced-metallising relief elements may have such a low average thickness that the metal layer transmits an appreciable amount of light (e.g. more than 30% of incident light, preferably more than 50%, more preferably more than 70%), thereby enabling transmitted light to be exhibited in the regions of the reduced-metallising relief elements. The method comprises etching the metal layer coated on the first surface (using an etchant) such that any metal layer is substantially removed from the inclined portions of the first surface (or at least reduced to a thickness at which it is substantially transparent) and remains on the raised portions and/or the recessed portions, thereby providing an array of functioning plasmonic nanostructures. That is, the thinner metal layer deposited on the array of reduced-metallising relief elements may be substantially removed by an etching step which, since the metal layer is thicker on the raised portions and/or the recessed portions of the plasmonic nanostructure elements, leaves sufficient metal on the plasmonic nanostructure elements for them to continue to function as plasmonic nanostructures. That is, the metal layer remaining on the plasmonic nanostructure elements acts as metallic nanostructures enabling the interactions with light that have been described above.

It is particularly preferable to provide that the regions of the reduced-metallising relief elements have no metal layer, or a metal layer so thin as to be effectively transparent, as this may allow the security device to be transparent in regions away from the plasmonic nanostructures such that, for example, an underlying security document can be visualised such that the plasmonic nanostructures appear superposed directly on the security document.

While the dielectric substrate may be provided with the required structures already formed therein, preferably providing the dielectric substrate having a first surface defining a relief structure comprises: providing a layer of dielectric material; and forming a first surface of the dielectric material so as to define the array of plasmonic nanostructure elements and the array of reduced-metallising relief elements. A number of means of forming the relief structure are possible. Although, however formed, preferably all of the plasmonic nanostructure elements are formed in the same step such that all those structures, and any colours defined by those structures, are inherently registered to one another. In some embodiments, the layer of dielectric material is thermo-formable and forming the first surface of the dielectric material comprises thermo-embossing the array of plasmonic nanostructure elements and the array of reduced-metallising relief elements into the first surface of the dielectric material. The plasmonic nanostructure elements could be formed a first forming step and the reduced-metallising relief elements in a second forming step; however, preferably the array of plasmonic nanostructure elements and the array of reduced-metallising relief elements are thermo-embossed in the same thermo-embossing step. This enables the reduced-metallising relief elements to be integrally registered to the plasmonic nanostructures. Alternatively, the layer of dielectric material may be a layer of curable dielectric material and forming the first surface of the dielectric material comprises casting the array of plasmonic nanostructure elements and the array of reduced-metallising relief elements into the first surface of the curable dielectric material and curing the curable dielectric material so as to fix the relief structure in the first surface of the dielectric material. Again, preferably the array of plasmonic nanostructure elements and the array of reduced-metallising relief elements are cast in the same casting step (and cured in the same curing step) so that the structures are registered to one another.

A number of different forms of reduced-metallising relief elements may be used. In some embodiments, the array of reduced-metallising relief elements comprises a one-dimensional array of elongate elements, the elongate elements being substantially triangular or convex in cross-section (the cross-section being perpendicular to the direction of elongation). Alternatively, the array of reduced-metallising relief elements may comprises a two-dimensional array of substantially conical or pyramidal surface elements. Whether one dimensional or two dimensional, the relief elements should have a high aspect ratio to ensure appropriately steep sides for reducing the thickness of the deposited metal layer. For example, we may consider an area ratio (AR) to be the relationship between the surface area of a facet or relief element and the footprint of that facet or relief element on the substrate, i.e. footprint in the plane of the substrate. Preferably, each reduced-metallising relief element will have an AR of at least 2 (that is, a surface area at least twice the area of its footprint), more preferably an AR of at least 3, further preferably an AR of at least 4.

Typically, the direction of the directional coating is substantially perpendicular to the plane of the substrate. Angles away from the perpendicular will work less efficiently, but may still achieve the desired result of a thinner metal coating on the reduced-metallising relief elements than on the raised and recessed areas of the plasmonic nanostructure elements.

Preferably, the method comprises applying a cover layer over the dielectric substrate such that a surface of the cover layer closest to the dielectric layer conforms to the relief structure defined by at least the array of reduced-metallising relief elements, wherein preferably the dielectric substrate and the cover layer are substantially formed of transparent materials and wherein the cover layer has a refractive index within 0.1, preferably within 0.05, of a refractive index of the dielectric substrate such that the reduced-metallising relief elements generate a non-visible effect. In particular, this will act to suppress any diffraction or scatter by the reduced-metallising relief elements. Such a cover layer may protect the relief structure and prevent degradation of the optical effects. A conformal cover layer may be provided by, for example, applying a curable layer over the first surface of the substrate such that it conforms to the relief structure and subsequently curing the curable cover layer to fix the layer in place. The cover layer may be applied directly on to the first surface of the substrate layer (and any metal layer), or one or more intermediate layers may be provided, such as a primer layer.

In some embodiments, the relief structure further comprises neutral areas, the array of reduced-metallising relief elements defining inclined portions of the first surface having an inclination relative to the plane of the substrate greater than the inclination of the neutral areas of the first surface; wherein directionally coating the first surface of the substrate with the metal layer also coats the neutral regions with the metal layer, the metal layer coating the neutral regions being thicker than any metal layer coating the inclined portions of the first surface defined by the array of reduced-metallising relief elements, and wherein the neutral areas do not contribute to the array of functioning plasmonic nanostructures, i.e. the neutral areas do not comprise plasmonic nanostructure elements. If etching of the metal layer is performed, etching the metal layer coated on the first surface provides that the metal layer remains on the neutral areas of the first surface. Neutral areas may comprise any structure that is not an array of plasmonic nanostructures or an array of reduced-metallising relief elements. For example, the neutral area may comprise a substantially planar surface parallel to the plane of the substrate, e.g. so as to define highly reflective areas of the security device component. Alternatively, the neutral areas may comprise optically variable structures such as diffraction gratings.

The plasmonic nanostructure elements may be freely arranged as desired. Preferably, the array of plasmonic nanostructure elements are provided across a first region in accordance with a first pattern such that the array of functioning plasmonic nanostructures exhibits the first pattern in reflection. Specifically, the plasmonic nanostructure elements may be present and absent in different regions to define a pattern. The plasmonic nanostructure elements of the array of plasmonic nanostructure elements may also vary in at least one of their shape, size and spacing across the first region to provide colour variation of the first pattern. The array of reduced-metallising relief elements may at least partially delimit the first pattern. For example, the plasmonic nanostructures may be present in a region defining a letter 'A' and the reduced-metallising elements present outside this region so that the 'A' appears coloured on a preferably transparent background. This arrangement may provide that the first pattern is visible in transmission, with the plasmonic nanostructure regions appearing either more opaque than the reduced-metallising element regions or exhibiting a complimentary transmissive colour spectrum, depending on the viewing angle in transmission. While a simple pattern defining a letter 'A' is described, it will be appreciated that more complex patterns, such as pictures, could be formed in this way and still achieve the complementary appearances in reflection and transmission. Alternatively, or additionally, the array of reduced-metallising relief elements may form a border at least partially surrounding the first pattern. For example, the plasmonic nanostructures may again be present in a region defining a letter 'A' while the region outside the letter 'A' comprises either a neutral structure, such as a flat surface, or plasmonic nanostructures defining a different colour such that a coloured 'A' is visible on a reflective or differently coloured background. The reduced-metallising relief elements may then be present in a border region around the coloured 'A' and background.

Preferably, the array of plasmonic nanostructure elements are provided across an array of first sub-regions and/or the array of reduced-metallising relief elements are provided across an array of second sub-regions. For example, the array of plasmonic nanostructure elements may be provided across an array of areas acting as pixels of an image visible in reflection. Alternatively, an array of second sub-regions of reduced-metallising relief elements may define a pattern visible in transmission. The plasmonic nanostructure elements of the array of plasmonic nanostructure elements may vary in at least one of their shape, size and spacing across at least some of the first sub-regions to provide colour variation of the first pattern. In some embodiments, the arrangement of the array of first sub-regions defines the first pattern visible in reflection and the arrangement array of second sub-regions defines a second pattern, the second pattern being exhibited in transmission owing to the metal layer being retained in the first sub-regions with a thickness greater than any metal layer in the second sub-regions. The plasmonic nanostructures can exhibit a pattern by varying size, shape and spacing to vary colour, or can exhibit a coloured pattern against a background of neutral areas. Meanwhile, the reduced-metallising relief elements can define a pattern in transmission against the areas provided by plasmonic nanostructure areas and/or neutral areas. Therefore, the security device can exhibit different patterns in reflection than in transmission, leading to a very visually striking effect. In some cases, the first pattern is a multi-coloured version of the second pattern. In other cases, the first pattern has a form different to a form of the second pattern.

Plasmonic nanostructures lend themselves to producing very high resolution imagery. However, in some cases, the first pattern defines a first image, preferably being configured for viewing in reflection by the unaided eye. That is, they may define a macroscale pattern. Alternatively, the first pattern may define an array of microimages or image elements such that the array of functioning plasmonic nanostructures exhibits the array of microimages or image elements in reflection. Microimages include the images utilised in moiré magnification security devices (examples of which are described in EP 1695121 A, WO 94/27254 A, WO 2011/107782 A and WO 2011/107783 A) and integral imaging security devices. These images are typically miniature versions of an image that will be synthetically magnified. Image elements include image portions used in so-called lenticular devices, which include one-dimensional devices (examples of which are described in US 4892336 A, WO 2011/051669 A, WO 2011051670 A, WO 2012/027779 A and US 6856462 B) and two-dimensional lenticular devices (examples of which are described in WO2015/011493 A and WO 2015/011494 A). Image elements are typically slices or pixels of an image to be displayed. Lenticular devices utilise interleaved sets of image slices or pixels that can be selectively displayed by a corresponding lens array to reconstruct respective images from the different sets of interleaved image slices or image pixels. Microimages and image elements can make use of the high resolution provided by plasmonic nanostructures and provide more detail than has been possible previously using printing techniques. Furthermore, as has been mentioned above, multi-coloured microimages with perfectly registered colours can be achieved. For example, the first pattern may define an array of microimages or image elements, and the plasmonic nanostructure elements of the array of plasmonic nanostructure elements may vary in at least one of their shape, size and spacing across the array of microimages such that microimages or image elements vary in colour across the array. Microimages and image elements may vary in colour across the array by each microimage being a different colour to the next (e.g. an array of microimages may gradually change from red to yellow across the array of microimages). Alternatively, or in addition, the plasmonic nanostructure elements of the array of plasmonic nanostructure elements may vary in at least one of their shape, size and spacing across at least one of the microimages or image elements such that said at least one of the microimages or image elements is a multi-coloured microimage or image element (e.g. each microimage may be the same multi-coloured image, or each image element may vary in accordance with a corresponding image).

Preferably, the first pattern defines an array of microimages and the array of plasmonic nanostructure elements either positively or negatively defines each image element of the array of microimages. Similarly, the array of reduced-metallising relief elements may positively or negatively defines each microimage of the array of microimages. In some cases, the plasmonic nanostructure elements may positively define each image element and the reduced-metallising relief elements negatively define that same image element or vice versa. In other cases, the array of plasmonic nanostructure elements is provided across an array of first sub-regions and the array of reduced-metallising relief elements is provided across an array of second-sub regions, the first and second sub-regions being defined against a background of neutral areas, wherein each first sub-region defines a microimage of a first array of microimages and each second sub-region defines a microimage of a second array of microimages, the microimages of the second array of microimages having a form different to a form of the microimages of the first array of microimages, the second array of microimages being exhibited in transmission owing to the metal layer retained in the first sub-regions and neutral areas being thicker than any metal layer the second sub-regions. This may be used to produce a moiré magnification device that exhibits different images in reflection and transmission.

As has been mentioned, the structures may be used to define image elements of, for example, a lenticular security device. Here the first pattern may define an array of image elements, the image elements being arranged based on a repeating unit cell arranged on a regular grid in at least one dimension, the unit cell defining a set of image element positions therewithin, each image element position within the unit cell carrying an image element of a respective corresponding image.

Many of the above devices require a lens array, or similar, for imaging microimages or image elements. Therefore, preferably, the method further comprises providing an array of focussing elements over the array of microimages or image elements. Preferably, the array of focussing elements is an array of lenses or microlenses; however, focussing mirrors may also be used. If the first pattern defines an array of microimages, then preferably the array of focussing elements has a pitch different from a pitch of the array of microimages and/or the array of focussing elements are provided in rotational misalignment with the array of microimages such that the focussing elements display a synthetically magnified version of the array of microimages owing to the moiré effect. For the above lenticular device, the array of focussing elements may be provided with a periodicity substantially the same as, or an integral multiple of, a periodicity of the regular grid of the repeating unit cell such that, depending on the viewing angle, the array of focusing elements directs light from selected image element positions to the viewer, such that as the device is tilted different ones of the respective images are displayed by the image elements at the selected image element positions in combination, sequentially.

A number of different types of plasmonic nanostructure may be used, including sub-wavelength one-dimensional and two-dimensional grating patterns, sub-wavelength two-dimensional arrays of nanoholes, and sub-wavelength two-dimensional arrays nanopillar antennae. Here, sub-wavelength should be interpreted as meaning having dimensions less than the wavelength of visible light, e.g. 500 nm or less. In some cases, the array of plasmonic nanostructure elements comprises a two-dimensional array of nanopillars, the tops of the dielectric nanopillars defining the raised portions of the first surface and the areas between the nanopillars defining the recessed portions of the first surface. Such pillars may be circular in horizontal cross-section, or may have other shapes such as square or oval. As mentioned, the shape may be configured to affect the colour generated by the array of plasmonic nanostructures. Alternatively, the array of plasmonic nanostructure elements may comprise a two-dimensional array of nanoholes (i.e. nanoholes formed in the dielectric layer), the base of the nanoholes defining the recessed portions of the first surface and the areas between the nanoholes defining the raised portions of the first surface. The nanohole will typically comprise a metal layer at the base of the nanohole, received from the directional deposition. The plasmonic nanostructure elements of the array of plasmonic nanostructure elements may each have lateral dimensions of between 50 and 250 nm, preferably between 80 and 220 nm. The plasmonic nanostructure elements of the array of plasmonic nanostructure elements may have a spacing of between 100 nm and 500 nm, preferably between 130 nm and 400 nm, i.e. from the centre of one structure to the centre of the nearest other structure. Typical substrate materials for plasmonic nanostructures include acrylated oligomers such as acrylic esters of polyesters, polyethers, polyurethanes and epoxy resins. Alternatively, suitable thermoplastic materials may be used, often based on acrylic (PMMA) or urethane chemistries.

In accordance with a second aspect of the present invention, there is provided a security device component according to claim 15.

This security device component corresponds to a security device component manufactured by the method according to the first aspect of the invention. It will be appreciated that all of the above described preferable features of the method have equivalent preferable features relating to this security device component.

Described there is a method of manufacturing a security device component comprising: providing a dielectric substrate coated with a metal layer on its first surface, wherein the dielectric substrate and the metal layer together define an array of functioning plasmonic nanostructures across a first region of the substrate, wherein the metal layer is soluble in a first etchant substance; applying a photosensitive resist layer to the dielectric substrate coated with the metal layer across at least some of the first region; exposing the photosensitive resist layer in the first region to radiation of a wavelength to which the photosensitive resist layer is responsive through a patterned mask, wherein the patterned mask defines first pattern areas in which the mask is substantially opaque to the radiation and second pattern areas in which the mask is substantially transparent to the radiation, whereupon exposed second pattern areas of the photosensitive resist layer react to the radiation resulting in either increased or decreased solubility by a second etchant substance, non-exposed first pattern areas of the photosensitive resist layer correspondingly remaining relatively insoluble or soluble by the second etchant substance; and applying the first and second etchant substances to the substrate, whereupon either the first or second pattern areas of both the resist layer and the metal layer are dissolved and such that the metal layer remaining in the other of the first or second pattern areas maintains an array of functioning plasmonic nanostructures across the corresponding pattern areas.

In this embodiment, a functioning array of plasmonic nanostructures is provided and then a resist and etchant used to remove the metal from certain plasmonic nanostructures, thereby inhibiting their ability to function. This method facilitates the formation of coloured regions provided by plasmonic nanostructures against a demetallised background.

The described method includes both embodiments in which the resist becomes more soluble when exposed to an appropriate light source and in which the resist becomes less soluble when exposed to an appropriate light source. Where the resist becomes more soluble when exposed, the mask should be designed such that those areas in which it is desired that an array of functioning plasmonic nanostructures remains at the end of the process correspond to the opaque areas of the mask (i.e. the first pattern areas correspond to the areas that should maintain an array of functioning plasmonic nanostructures). Alternatively, where the resist becomes less soluble when exposed, the mask should be designed such that those areas in which it is desired that an array of functioning plasmonic nanostructures remains at the end of the process correspond to the transparent areas of the mask (i.e. the second pattern areas correspond to the areas that should maintain an array of functioning plasmonic nanostructures).

Suitable plasmonic nanostructures include those discussed above in relation to the first aspect, which comprise a relief structure formed in a dielectric layer, but also include plasmonic nanostructures that do not comprise such a relief structure. One example of a type of plasmonic nanostructure that does not use a relief structure is an arrangement comprising a continuous metal base layer, a continuous dielectric layer on the continuous metal base layer and a two-dimensional array of metallic nanodiscs on the continuous dielectric layer. While this arrangement of plasmonic nanostructures is also suitable for the present invention, in many cases, the substrate has a first surface defining a relief structure in the first region of the substrate, the relief structure comprising an array of plasmonic nanostructure elements, wherein the metal layer is provided on the relief structure of the first surface across the first region such that the array of plasmonic nanostructure elements and the metal layer together provide the array of functioning plasmonic nanostructures. In these embodiments, preferably, providing the dielectric substrate coated with the metal layer comprises: providing a dielectric substrate, wherein the substrate has a first surface defining a relief structure in a first region, the relief structure comprising an array of plasmonic nanostructure elements; and directionally coating the first surface of the substrate with the metal layer such that the array of plasmonic nanostructure elements and the metal layer together provide the array of functioning plasmonic nanostructures. For example, the metal layer may be directionally coated in a direction perpendicular to the plane of the security element to provide the metal layer on land areas and recess areas of the relief structure, as is discussed above in relation to the first aspect of the present invention. While the substrate may be provided with the plasmonic nanostructure elements already formed, preferably, providing the dielectric substrate comprises: providing a layer of dielectric material; and forming a first surface of the dielectric material so as to define the array of plasmonic nanostructure elements.

Preferable forms of plasmonic nanostructures, as described above, include a two-dimensional array of nanopillars, a two-dimensional array of nanoholes, and an array of functioning plasmonic nanostructures that is formed at least partially by the metal layer providing a two-dimensional array of nanodiscs on the first surface of the dielectric substrate (e.g. an arrangement comprising a continuous metal base layer, a continuous dielectric layer on the continuous metal base layer and a two-dimensional array of metallic nanodiscs on the continuous dielectric layer). The plasmonic nanostructures may each have lateral dimensions of between 50 and 250 nm, preferably between 80 and 220 nm. The plasmonic nanostructure elements of the array of plasmonic nanostructure elements may have a spacing of between 100 nm and 500 nm, preferably between 130 nm and 400 nm, i.e. from the centre of one structure to the centre of the nearest other structure. Typical substrate materials for plasmonic nanostructures include acrylated oligomers such as acrylic esters of polyesters, polyethers, polyurethanes and epoxy resins. Alternatively, suitable thermoplastic materials may be used, often based on acrylic (PMMA) or urethane chemistries.

The resist may be configured to remain over the functioning plasmonic nanostructures in the final security device component. For example, the resist may be substantially transparent and may act as a protective cover layer that prevents the plasmonic nanostructures from being damaged. However, to reduce thickness, in some embodiments, the method further comprises applying a further etchant substance to the substrate to dissolve the remaining photosensitive resist layer in the corresponding first or second pattern areas (i.e. in the areas in which the resist is relatively insoluble after exposure). For example, the relatively insoluble resist may be removable by a third etchant. It is important, however, that in any subsequent etching step, the metal layer located under the relatively insoluble resist is not removed. The first etchant is therefore preferably not present in a subsequent etching step. Advantageously, the photosensitive resist comprises diazonapthaquinone (DNQ) -based resist material, preferably 1,2-Napthoquinone diazide. Preferred resist layers have a thickness of less than 1 micron, more preferably between 0.2 and 0.6 microns. The second etchant substance will be a solvent in which the metal layer is substantially insoluble. Where the resist comprises a diazonapthaquinone (DNQ) -based resist, suitable substances for removing it include methyl ethyl ketone (MEK).

Some embodiments further comprise applying a cover layer over the dielectric substrate such that a surface of the cover layer closest to the dielectric layer conforms to the first surface of the dielectric substrate (i.e. to any relief structure) in pattern areas in which the metal layer has been dissolved, wherein preferably the dielectric substrate and the cover layer are substantially formed of transparent materials and wherein the cover layer has a refractive index within 0.1, preferably within 0.05, of a refractive index of the dielectric substrate such that the cover layer and the substrate, together, are substantially non-visible to the naked eye in pattern areas in which the metal layer has been dissolved. If the relatively insoluble resist has also been removed, the cover layer may also conform to any relief structure in the pattern areas in which the metal layer has not been dissolved.

In some embodiments, the second etchant substance is the same as the first etchant substance, and the first or second pattern elements (i.e. the areas in which the resist is relatively soluble) of both the first resist layer and the metal layer are soluble in the same first etchant substance. Whether or not the first etchant is the same as the second etchant, preferably, the first or second pattern elements (i.e. the areas in which the resist is relatively soluble) of the metal layer and of the resist layer are dissolved in a single etching procedure. In some preferred embodiments, the first etchant substance is alkaline (caustic), the photosensitive resist comprising a material which becomes soluble in alkaline conditions upon exposure to radiation, preferably ultraviolet radiation, and the first metal layer comprises a metal which is soluble in alkaline conditions, such as aluminium. Aluminium, in particular, lends itself to the formation of plasmonic nanostructures. Silver and gold have also been used historically for the production of plasmonic nanostructures, though are not as cost effective as aluminium. Copper is another alternative, which is soluble in acid, but as a coloured metal prone to oxidation is less suitable than aluminium.

An advantage of demetallising certain areas of the security device component is that the plasmonic nanostructures are made non-functioning and so different effects can be accommodated in this region of the security device component. One way this can be done is by ensuring the demetallised areas are transparent so that areas underneath the substrate can be visualised. Transparency may be provided simply to reveal underlying areas of the security document to which the security device is provided. However, preferably, the dielectric substrate is formed of a substantially transparent material and the method further comprises applying a further layer over a second surface of the dielectric substrate such that said further layer is visible through the pattern areas in which the metal layer has been dissolved. Since any further layer will not be visible through the metallised areas of the substrate (e.g. the areas with functioning plasmonic nanostructures) it is not necessary to pattern the further layer to avoid superposing different visual effects. That is, the further layer may be provided across at least the entire first region such that it is visible through the pattern areas in which the metal layer has been dissolved regardless of the form of the pattern areas in the first region.

Preferably, said further layer comprises at least one of a coloured layer, a coloured print, a diffractive relief structure, an antireflective relief structure, such as an array of moth-eye relief structures, an optically detectable substance, such as a fluorescent or phosphorescent material, and a colourshifting layer, such as an interference thin film structure, liquid crystal material, Bragg stack, or photonic crystal material, arranged so as to be visible through the pattern areas in which the metal layer has been dissolved. In particular, a further layer in the form of an optically variable effect generating structure is advantageous, as an optically variable effect may contrast the relatively optically invariable plasmonic nanostructures and thereby provide a striking and easily authenticable appearance further improving the security of the final security device.

As mentioned above, plasmonic nanostructures can be varied to control the colour that they exhibit. Therefore, preferably, the plasmonic nanostructures of the array of functioning plasmonic nanostructures vary in at least one of their shape, size and spacing across the first region, such that the colour exhibited by the maintained array of functioning plasmonic nanostructures varies across the first region. In particular, the plasmonic nanostructures of the array of functioning plasmonic nanostructures may vary gradually in at least one of their shape, size and spacing across the first region, such that the colour exhibited by the maintained array of functioning plasmonic nanostructures varies gradually across the first region. For example, the plasmonic nanostructures, as initially provided, may define a continuous region that gradually changes in colour, e.g. from yellow to red, across the security device component. The resist and etchant may then be used to etch an image into the array of plasmonic nanostructures such that the image varies in colour from yellow to red across the image. Alternatively, the plasmonic nanostructures may vary in colour on a smaller scale, e.g. so as to provide individual microimages that vary in colour.

As indicated above, preferably, the first and/or second pattern areas define a first image exhibited by the maintained array of functioning plasmonic nanostructures, the first image preferably being configured for viewing in reflection by the unaided eye.

In other embodiments, the first and/or second pattern areas define an array of microimages or image elements such that the maintained array of functioning plasmonic nanostructures exhibits the array of microimages or image elements in reflection. Preferably, the first and/or second pattern areas define an array of microimages or image elements, and the plasmonic nanostructures of the array of functioning plasmonic nanostructures vary in at least one of their shape, size and spacing across the first region such that microimages vary in colour across the array of microimages or image elements. For example, the resist and etchant may define an array of microimages that gradually change colour across the array. Alternatively, or in addition, the plasmonic nanostructures of the array of functioning plasmonic nanostructure elements may vary in at least one of their shape, size and spacing across the first region such that said at least one of the microimages or image elements is a multi-coloured microimage. For example, the plasmonic nanostructures, as initially provided, may provide colour variation across a continuous region that has a certain periodicity of its variation. The resist and etchant may then be used to etch an array of microimages or image elements having the same pitch as the periodicity of the colour variation, such that each microimage or image element exhibits the same colour variation. The use of the etchant and resist to define microimages or image elements may be useful for producing security device components for moiré magnification devices or lenticular imaging devices, as has been discussed above.

The structures may be used to define image elements of, for example, a lenticular security device. Here the first and second pattern areas define an array of image elements, the image elements being arranged based on a repeating unit cell arranged on a regular grid in at least one dimension, the unit cell defining a set of image element positions therewithin, each image element position within the unit cell carrying an image element of a respective corresponding image.

Many of the above devices require a lens array for imaging microimages or image elements. Therefore, preferably, the method further comprises providing an array of focussing elements over the array of microimages or image elements. In some embodiments, the first and/or second pattern areas define an array of microimages and the array of focussing elements has a pitch different from a pitch of the array of microimages and/or the array of focussing elements are provided in rotational misalignment with the array of microimages such that the focussing elements display a synthetically magnified version of the array of microimages owing to the moiré effect. This may produce a moiré magnification security device.

Where the image elements are for a lenticular device, the array of focussing elements may be provided with a periodicity substantially the same as, or an integral multiple of, a periodicity of the regular grid such that, depending on the viewing angle, the array of focusing elements directs light from selected image element positions to the viewer, such that as the device is tilted different ones of the respective images are displayed by the image elements at the selected image element positions in combination, sequentially.

In some embodiments, the functioning plasmonic nanostructures may be initially provided across a grid defining interlaced regions providing different colour components for a final image. For example, in a specific embodiment of this, the plasmonic nanostructures as initially provided may define a grid of red, green and blue pixels, thereby allowing the resist and etchant to define any full colour image in the array of plasmonic nanostructures. In more detail, the array of functioning plasmonic nanostructures may be provided across a periodic array of first and second sub-regions of the first region, wherein the plasmonic nanostructures in the first sub-regions have a size, shape and spacing providing a first colour in any corresponding sub-regions of the maintained array of functioning plasmonic nanostructures, and wherein the plasmonic nanostructures of the second sub-regions have a size, shape and spacing providing a second colour, different from the first colour, in any corresponding sub-regions of the maintained array of functioning plasmonic nanostructures. This would provide two colour components to any etched image. The array of functioning plasmonic nanostructures may further be provided across third sub-regions of the first region, wherein the plasmonic nanostructures in the third sub-regions have a size, shape and spacing providing a third colour, different from the first and second colours, in any corresponding sub-regions of the maintained array of functioning plasmonic nanostructures. Typically, the sets of sub-regions would each have the same periodicity across the first region. Then, the first and second pattern areas would typically be arranged across corresponding sub-regions of the patterned mask having substantially the same periodicity as the periodicity of the array of sub-regions across which plasmonic nanostructures are provided such that the colour(s) of the maintained array of functioning plasmonic nanostructures is determined by the relative positioning of the first region and the patterned mask during exposure. To ensure the various colour components are maintained, the patterned mask should be rotationally registered to the substrate during exposure using conventional registration means. It may also be necessary to provide the sub-regions on a large enough scale that lateral registration can be controlled to a sufficient degree to ensure that the sub-regions are exposed to the correct image component of a desired final image, using conventional registration techniques.

It is described herein a security device component manufactured in accordance with the method according to the third aspect of the invention. It will be appreciated that all of the above described preferable features of the method have equivalent preferable features relating to this security device component.

## BRIEF DESCRIPTION OF THE DRAWINGS

The present invention will now be described with reference to the accompanying Figures, in which:

Figures 1A and 1B show a conventional security device is schematic front view and cross-section respectively;

Figures 2A to 2C illustrate another conventional security device, showing the device in cross-section, showing the arrangement of image elements for a plurality of focussing elements and showing the images carried by the image elements respectively;

Figures 3A and 3B illustrate another conventional security device, showing the device in schematic perspective view and showing the arrangement of image elements for single focussing element respectively;

Figures 4A to 4G show, schematically, a method of forming a security device component according to a first embodiment at seven different stages during manufacture;

Figures 5A and 5B show enlarged perspective views of different portions of the relief structure used in the first embodiment;

Figure 6 shows a final security device component manufactured according to the method of the first embodiment;

Figures 7A and 7B show the appearance of the security device component manufactured according to the first embodiment and an enlarged portion of the surface of the security device component respectively;

Figures 8A and 8B show the appearance of a security device component manufactured according to a second embodiment and an enlarged portion of the surface of the security device component respectively;

Figures 9A to 9E show schematically, a method of forming a security device component according to a third embodiment at five different stages during manufacture;

Figure 10 shows the appearance of the security device component manufactured according to the third embodiment;

Figures 11A and 11B show the appearance of a security device component manufactured according to a fourth embodiment and a cross-section of a security device comprising the security device component respectively;

Figure 12 shows the appearance of the security device component manufactured according to the fifth embodiment;

Figures 13A and 13B show, in schematic perspective and cross-section views, an alternative metallised relief structure suitable for use in security device components of the present invention;

Figures 14A to 14F show, schematically, a method of providing a metallised relief structure suitable for use in embodiments of the invention at six different stages during manufacture;

Figures 15A to 15E show, schematically, a method of forming a security device component according to a sixth embodiment using a metallised relief structure at five different stages during manufacture;

Figure 16 shows, schematically, the appearance of the security device component manufactured according to the sixth embodiment;

Figure 17A to 17C shows, schematically, a method of forming a security device component according to a seventh embodiment using a metallised relief structure at three different stages during manufacture;

Figure 18 shows, schematically, the appearance of the security device component manufactured according to the seventh embodiment;

Figure 19 shows, schematically, a cross-section through a security device component manufactured according to an eighth embodiment of the invention;

Figure 20 shows, schematically, the appearance of the security device component manufactured according to the eighth embodiment;

Figures 21A to 21F show, schematically, a security device utilising a security device component manufactured according to a ninth embodiment, showing the device in cross-section, the two images carried by different sets of image elements, the interlaced sets of image elements, and the appearance of the security device at two different viewing angles respectively;

Figure 22 shows, schematically, the appearance of a security device component manufactured according to a tenth embodiment of the invention;

Figures 23A to 23C show, schematically, a method of manufacturing a security device component according to an eleventh embodiment of the invention, showing the component prior to demetallisation in plan and cross-section views and after demetallisation in plan view respectively;

Figures 24A to 24D show, schematically, a method of manufacturing a security device component according to a twelfth embodiment, showing the component prior to demetallisation in plan and cross-section views, the mask used during demetallisation and the component after demetallisation in plan view respectively; and

Figure 25 shows, in schematic perspective view, an alternative metallised structure suitable for use in the methods according to the sixth to twelfth embodiments of the invention;

## DETAILED DESCRIPTION

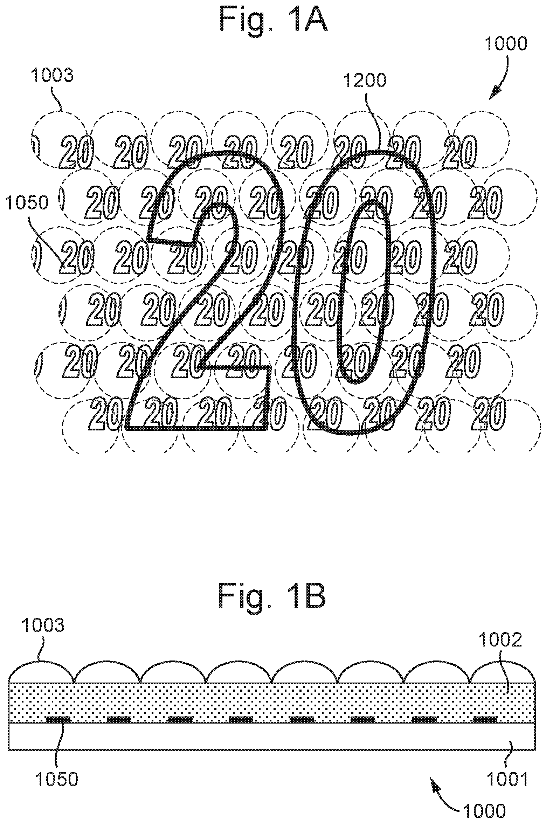

The present invention provides methods of forming security device components that may be utilised in a number of different types of security device for application to a security document. The security device may be a microscopic colour image for viewing with the unaided eye. However, in some preferable embodiments, the security device component is suitable for use in an optically variable security device. Three different types of known optically variable security device will now be described with reference to Figures 1A to 3B.

Figures 1A and 1B show a moiré magnification security device. Figure 1A shows, schematically, the appearance of the moiré magnification device when viewed by a viewer, while Figure 1B shoes a cross section through the security device. This security device 1000 comprises an array of microimages 1050 arranged on a support layer 1001. Each microimage 1050 depicts the same image information, in this case the number "20". Separated from the microimages 1050 by an optical spacer layer 1002 is lens array 1003, depicted in Figure 1A by the dashed-line circles. This microlens array 1003 has a pitch that is different to the pitch of the array of microimages 1050. Each microlens 1003 interacts with a corresponding area of the microimage element array located therebeneath. The result of the interaction between the lens array and the microimage array is the synthetically magnified version 1200 of the microimage 1050 generated owing to the moiré effect. While Figure 1A shows the images and the microimages as visible simultaneously, in practice, only the magnified image 1200 will be visible, and the microimages 1050 will not be seen. Other examples of moiré magnification security devices may be found in EP 1695121 A, WO 94/27254 A, WO 2011/107782 A and WO 2011/107783 A.

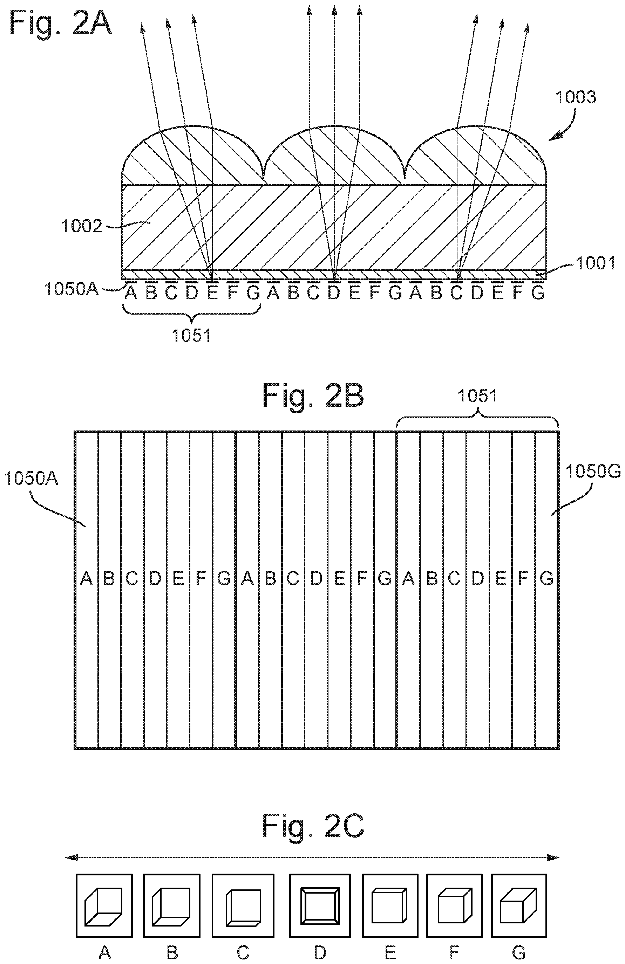

Figures 2A to 2C show a one-dimensional lenticular security device in order to illustrate certain principles of operation. As shown in Figure 2A this security device comprises a transparent support layer 1001 supporting an array of cylindrical microlenses 1003. An array of image elements or "strips" 1050 is provided on the opposite side of the transparent support layer 1001 underlying (and overlapping with) the cylindrical lenses 1003. The image elements 1050 are arranged based on a repeating unit cell arranged on a regular grid in one dimension. The unit cell comprises a series of image strips 1050A to 1050G, each of which carries a portion of a corresponding image. The images are shown in Figure 2C, labelled A to G. Each of the image strips corresponds to a portion of one of the images A to G. Under each lens 1003 of the lenticular array, one image slice from each of regions A to G is provided, forming a set 1051 of image elements. Under the first lens, the strips in the set will each correspond to a first segment of the respective image A to G and under the next lens, the strips in the next set will each correspond to a second segment of respective images A to G and so forth. Each lens 1003 is arranged to focus substantially in the plane of the image strip 1050 such that, ideally, only one strip can be viewed from one viewing position through each lens 1003. As such, at any viewing angle, only the strips corresponding to one of the images (A, B, C etc.) will be seen through the lenses.

The strips are arranged as slices of an image, i.e. the strips A are all slices from one image, similarly for strips B and C etc. As a result, as the device is tilted a series of different images will be seen. The images could be related or unrelated. The simplest device would have two images that would flip between each other as the device is tilted. Alternatively, the images could be a series of images that have been shifted laterally strip to strip, generating a lenticular animation effect so that the image appears to move. Similarly, the change from image to image could give rise to more complex animations (e.g. parts of the image changing in a quasi-continuous fashion), morphing (one image transforms in small steps to another image) or zooming (an image gets larger or smaller in steps).

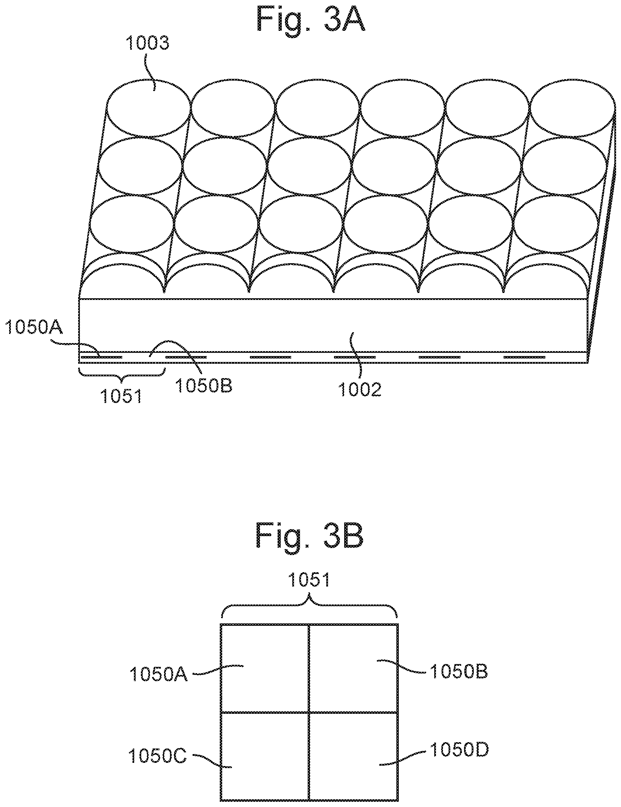

Figures 3A and 3B show a lenticular security device that is capable of generating optically variable effects in two dimensions, i.e. as the device is tilted in either of at least two orthogonal axes. Here, the security device 1000 comprises an array of focusing elements 1003 which take the form of (hemi-)spherical lenses arranged in a regular orthogonal grid pattern, although in other embodiments the focusing elements could be mirrors. The focusing elements could also have aspherical focusing surfaces if preferred. Thus, each focusing element 1003 is capable of focusing light in at least two orthogonal directions. The underlying array of image elements 1050 on the opposite side of transparent substrate 1002 comprises image elements arranged in an array which is periodic in both the X and Y directions, using for example the same principles of interweaving elements from multiple images as described in US-A-6483644. The example shown in Figure 3B comprises a two-by-two grid of image elements 1050A to 1050B. Here, instead of each image element being a slice of a corresponding image, each image element is effectively a "pixel" of a corresponding image. The spherical lenses thereby display a different one of the "pixels" to a viewer depending on the viewing angle such that at different viewing angles all of the pixels from a respective image are displayed. This is achieved by having the periodicity and orientation of the image element array being substantially the same as that of the focusing element array 1003.

Fundamentally, the above security devices use an array of focussing elements in combination with a precise pattern, e.g. a microimage pattern or a pattern of image elements. Conventional security devices widely use printed patterns in such security devices; however, the present invention provides alternative methods suitable for forming such patterns. Some specific examples of these methods will now be described.

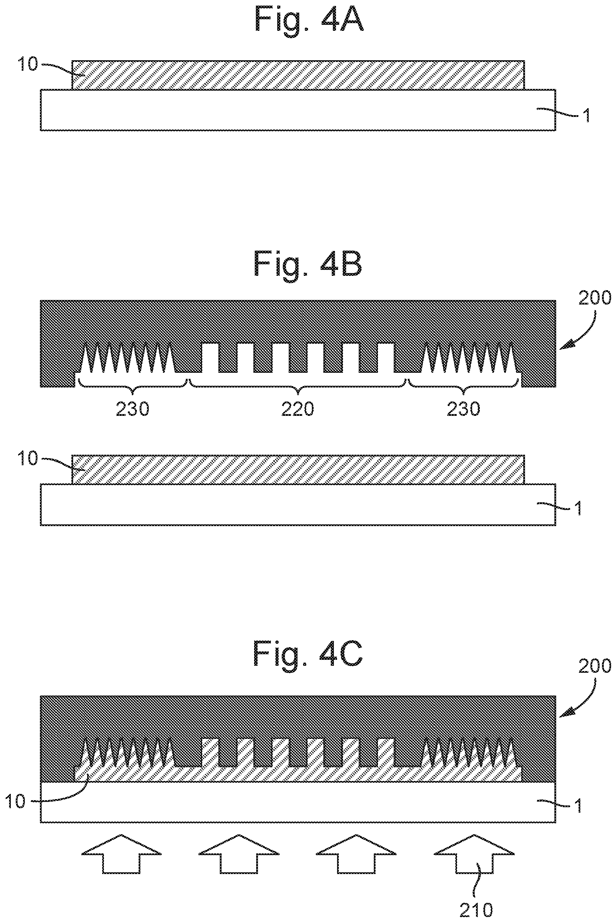

A first embodiment of the present invention will now be described with reference to Figures 4A to 7B.

Figure 4A shows a transparent support layer 1 that is provided with a layer of transparent curable dielectric material 10. A suitable UV curable dielectric material would be acrylated oligomers, such as acrylic esters of polyesters, polyethers, polyurethanes and epoxy resins, or formed in thermoplastic resins based on acrylic (PMMA) or urethane chemistries.

Figure 4B shows a casting mould 200 that is used to cast into the UV curable material 10. The casting mould 200 is engraved with a relief structure having one or more regions 220, which define an array of plasmonic nanostructure elements, and one or more regions 230 that define an array of reduced-metallising relief elements. The structure of these elements will be discussed in more detail below. It should be noted here, however, that because these elements can be engraved into the mould 200 in a single process, the regions 220 and 230 may be integrally in register with one another.

As shown in Figure 4C, the casting mould 200 is brought into contact with the support layer 1 such that it impresses its relief structure in to the first surface of the layer of curable material 10, i.e. the surface facing away from the transparent support layer 1. Simultaneously, the curable material 10 is exposed to UV radiation 210 to cure the material and thereby fix the relief structure in its surface. In this case, the support layer 1 is a transparent support layer and the UV curable material 10 is irradiated through the transparent support layer. However, in alternative embodiments, the casting mould 200 may be transparent and the curable material irradiated through the transparent casting mould.

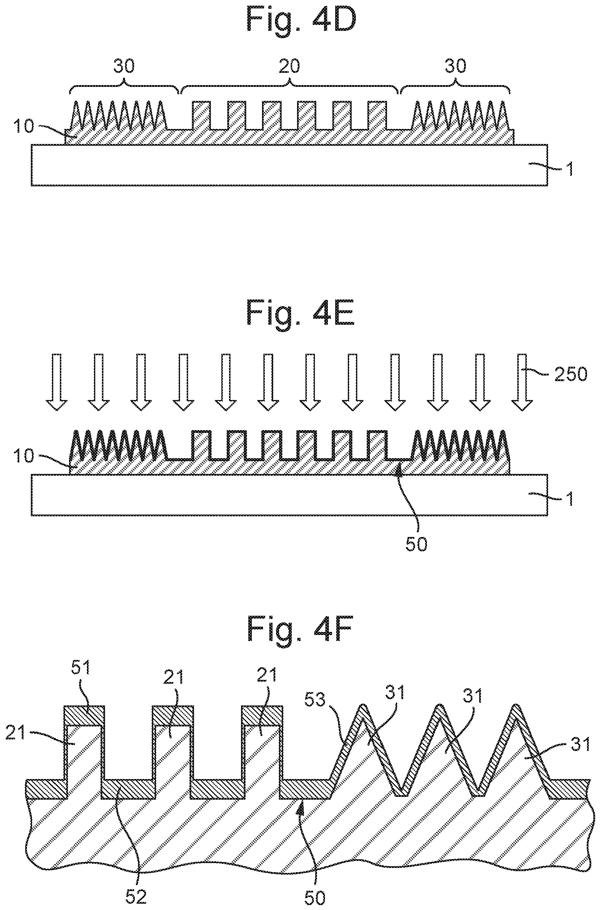

Figure 4D shows the security device component once the casting mould 200 has been separated from the support layer 1. The support layer 1 now carries on its surface a layer of cured curable material 10 that comprises in its first surface one or more regions 30 in which the surface of the cured curable material defines an array of reduced-metallising relief elements and one or more regions 20 in which the surface of the cured curable material defines an array of plasmonic nanostructure elements.

As shown in Figure 4E, the cured curable material 10 is subsequently directionally coated 250 with a metal layer 50 across the entire security device component. A suitable metal for use in the directional coating would be aluminium. The directional coating process 250 is carried out along a direction perpendicular to the surface of the substrate 1 and hence perpendicular to the plane of the security element.

Figure 4F shows the result of the directional coating of the relief structure cast into the curable material 10. Figure 4F shows, in schematic cross-section, individual plasmonic nanostructure elements 21 and individual reduced-metallising relief elements 31 and demonstrates the manner in which they receive the directionally coated metal layer.

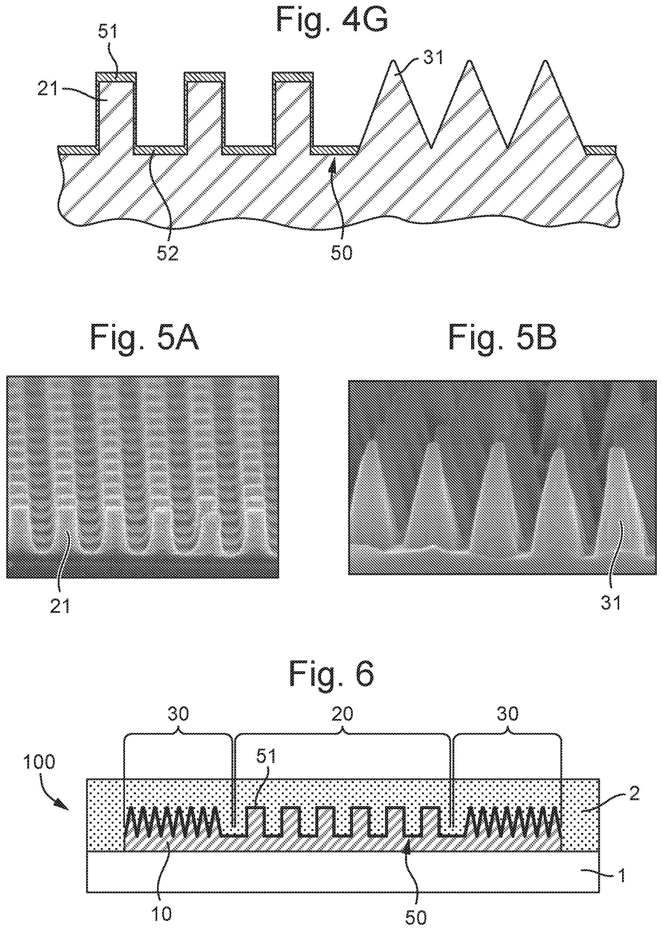

The form of these plasmonic nanostructure elements 21 and reduced-metallising relief elements 31 may be more clearly seen in Figures 5A and 5B, which are respective images of these structures. In this embodiment, each plasmonic nanostructure element 21 is an individual cylindrical nanopillar, as shown in Figure 5A. While cylindrical nanopillars are used in this embodiment, different shapes of nanopillar are also possible. Furthermore, embodiments are not limited to nanopillars in general and other forms of plasmonic nanostructure can also be used, including nanoholes, which will be described further below. As shown in Figure 5B, each reduced-metallising relief element 31, in this embodiment, defines a tall narrow cone shaped relief element. The reduced-metallising relief elements 31 each comprise steep, but not vertical, sides. Again, this is not the only possible form of reduced-metallising relief elements. For example, the reduced-metallising relief elements could be elongate, e.g. having a generally corrugated profile on the first surface, though these would present a smaller surface area to the flux of metal than a 2D structure of the same slope angle and thus achieve a lesser reduction in the metal thickness.

As can be seen in Figure 4F, the directionally coated metal layer 50 provides a relatively thick metal layer on the tops of each nanopillar, forming a metal nanodisc 51, and at the base surrounding each nanopillar, forming metal base layer 52. The substantially vertical sides of each nanopillar remain substantially uncoated by metal owing to the directional coating process 250 being carried out along a direction perpendicular to the substrate 1. The steep, but not vertical, sides of the reduced-metallising relief elements receive a relatively thin coating of the metal layer 53.

For example, the directional coating process 250 may be configured such that a coating of 30 nanometres in thickness is received on any surface perpendicular to the direction of the directional coating. In this case, the tops of each nanopillar 21 will receive a 30 nanometre thick coating of aluminium and, similarly, the base surrounding each nanopillar 21 will receive a coating of approximately 30 nanometers. However, the inclined surface of the reduced-metallising relief elements may provide that the metal layer 50 is received with an average thickness (measured perpendicular to the surface at any point) of, for example, 7 nanometres across the region 30. The metal layer is thereby thicker where the metal layer coats the tops and bases surrounding the nanopillars 51, 52 than it is where the metal layer coats the reduced-metallising relief elements 53.

In some embodiments, the reduced-metallising relief elements 31 may receive the metal layer with a thickness low enough that the metal layer is substantially transparent. For example, an aluminium coating of approximately 7 nanometres or less will oxidize clear due to a 3.5 nanometre oxidation layer on both sides of the metal layer. However, in this embodiment, the surface of the metal coated security device component is exposed to an etchant in order to etch away the metal layer coated on the first surface of the cured curable material. A suitable etchant for removing an aluminium metal layer would be sodium hydroxide. The metal may be exposed to the etchant for a period of time sufficient to substantially completely remove the metal layer from the reduced-metallising relief element, while not completely removing the metal layer from the plasmonic nanostructure elements 21. Figure 4G shows the first surface of the cured curable material after exposure to the etchant. Here, it can be seen that a layer of metal is retained on the tops of the nanopillars 51 and at the base of the nanopillars 52, albeit of lower thickness than prior to etching. For example, the metal layer may be reduced to 20 nanometres in thickness on the tops of the nanopillars 51 and at the base of the nanopillars 52. However, the reduced-metallising relief elements 31 are now completely devoid of any metal layer 50 as the etchant was able to completely etch away the metal layer in this region.

Figure 6 shows a completed security device component 100. Here, the security device component has been covered with a transparent cover layer 2 that conforms to the relief structure formed in the first surface of the cured curable material 10. The transparent cover layer 2 is also selected such that it has a refractive index substantially the same as the cured curable material 10. This security device component comprises a region 20 which comprises an array of plasmonic nanostructure elements 21, each of which, in combination with the metal layer, forms a functioning plasmonic nanostructure. The security device component 100 further comprises regions 30 which are substantially transparent owing to the lack of any metal layer 50 on the reduced-metallising relief elements 31 and owing to the similar refractive indices of the cured curable material 10 and the cover layer 2.

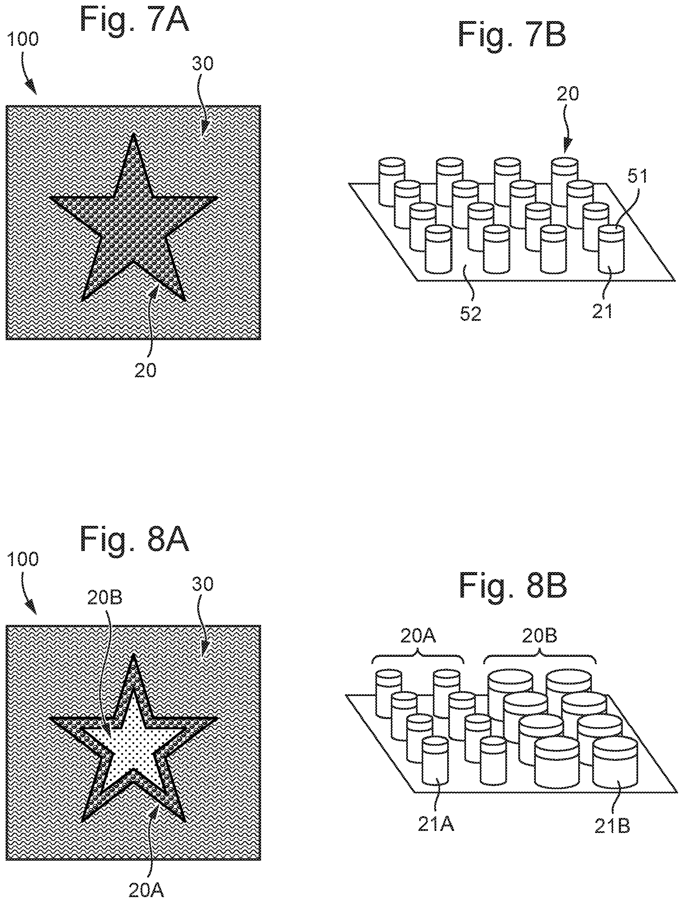

Figure 7A shows the appearance of this security device component 100 in plan view. In this case, the region 20 positively defines a star against a transparent background defined by region 30. The functioning plasmonic nanostructures provided across region 20 give the star a coloured appearance when viewed by a viewer owing to the plasmonic interactions described above. Figure 7B shows the array of functioning plasmonic nanostructures provided across region 20. As described above, each functioning plasmonic nanostructure comprises a dielectric pillar 21 formed from the cured curable material and a metal nanodisc 51 located on top of each nanopillar 21. In this embodiment, the plasmonic nanopillars are shown as having a singular shape, size and spacing, which will result in a single colour being exhibited. However, as will be discussed in more detail below, it is possible to vary the shape, size and spacing in order to vary the colour across the region 20 of functioning plasmonic nanostructures.

Figures 8A and 8B show an alternative security device component that may be produced according to the method of the present invention. In this case, the casting mould 200 defines two different sub-regions of plasmonic nanostructure elements 20A and 20B. In region 20A, the plasmonic nanostructure elements are nanopillars with a first diameter and spacing, and in region 20B, the plasmonic nanostructure elements are nanopillars with a second diameter and spacing. As mentioned above, the diameter and spacing of the plasmonic nanostructures determine the colour exhibited by the array of plasmonic nanostructures. In this embodiment, a star is defined by regions 20A and 20B in combination. Region 20A defines an outer area of a star, while region 20B defines a centre area of a star. When a viewer views the security device component of this embodiment, a different colour will be exhibited in regions 20A and 20B, giving the star a multi-coloured appearance. Figure 8B shows the boundary between regions 20A and 2B, illustrating the plasmonic nanostructures in those regions in more detail. This Figure shows the narrower plasmonic nanostructures 21A in region 20A in comparison with the larger nanostructures 21B in region 20B. While, in this embodiment, only two different regions are provided with two different colours, it will be appreciated that more complex variations in the plasmonic nanostructure array may be provided by the casting mould 200 such that a more complex variation in colour can be provided across the image. For example, full colour images may be produced by varying the array of plasmonic nanostructure elements such that small sub regions define individual pixels of different colours. This is described, for example, in "Plasmonic Color Palettes for Photorealistic Printing with Aluminum Nanostructures", Shawn J. Tan et al., Nano Letters, 2014, 14 (7), pp 4023-4029, DOI: 10.1021/nl501460x.

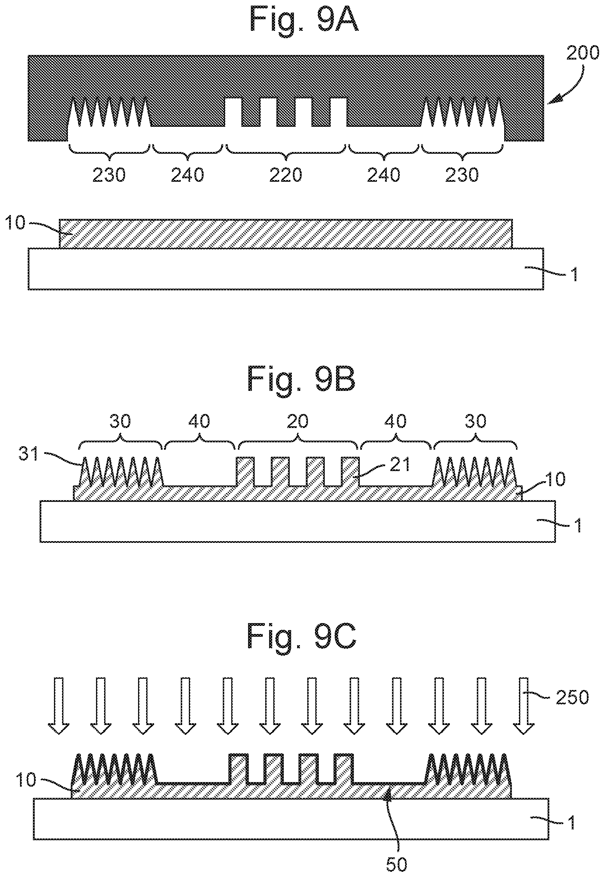

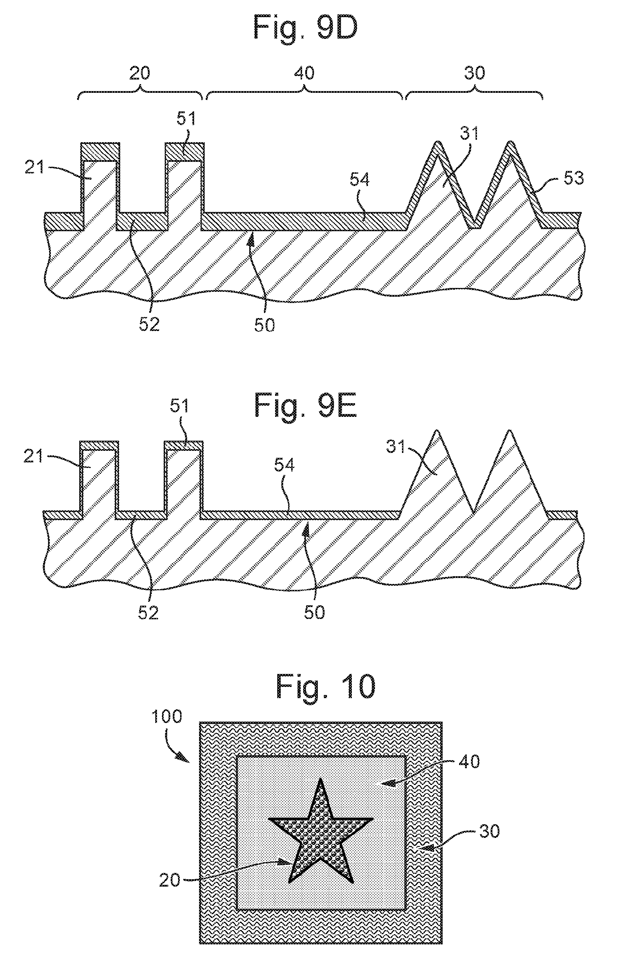

A further embodiment will be described with reference to Figures 9A to 10. Figure 9A shows a transparent support layer 1 provided with a layer of curable dielectric material 10. A casting mould 200 is provided that defines in one or more regions 220 a relief structure in the form of plasmonic nanostructure elements, and in one or more regions 230 a relief structure in the form of reduced-metallising relief elements. In addition, the casting mould 200 also defines regions 240 in which the surface of the curable material should remain substantially flat (above referred to as neutral areas).

The casting mould 200 is brought into contact with the curable material 10 so that a first surface of the curable material 10 follows the relief structure defined by the casting mould. The curable material 10 is cured by UV radiation such that the relief structure is fixed in the resulting cured curable material. This is performed as described above with respect to Figures 4B to 4D.

The resulting structure is shown Figure 9B. The cured curable material 10 comprising regions 20, in which plasmonic nanostructure elements in the form of nanopillars 21 are provided, regions 30, in which an array of reduced-metallising relief elements are provided, and regions 40 in which the surface of the cured curable material is substantially flat and parallel with a plane of the security device component.

As shown in Figure 9C, the cured curable material 10 is subsequently coated with a metal layer 50 deposited in a directional coating process 250. Again, the directional coating process 250 is performed in a direction substantially perpendicular to the plane of the security device component, i.e. perpendicular to the planar regions 40.

Figure 9D shows how the metal layer 50 is received across the regions 20, 30 and 40. As with the above embodiment, the metal layer is received with full thickness (e.g. 30 nanometres) on the tops of the plasmonic nanostructure elements 21 and at the base of the plasmonic nanostructure elements owing to the surface being substantially parallel to the plane of the security device component in these locations. Again, the vertical sides of the nanopillars forming the plasmonic nanostructure elements are substantially uncoated by the metal layer 50. Region 40, in which the surface of the cured curable material is substantially flat, also receives the metal layer 50 with the full deposition thickness (e.g. 30 nanometers). Region 30, however, receives a reduced thickness of the metal layer 50 owing to the steeply inclined surface portions defined by the reduced-metallising relief elements 31. Again, the thickness received on the reduced-metallising relief elements 31 may be, for example, approximately 7 nanometres measured in a direction perpendicular to the first surface at any point. As has been explained, the reduction in metal thickness is due to the effective surface area of the sloped sides of the conical relief structure being larger than the area of its base and so the metal layer is deposited over a larger area.

The cured curable material and coated metal layer 50 are then subjected to an etching process in a manner similar to described above. The result here is that the metal is again removed from the reduced-metallising relief elements 31, but is not entirely removed in the neutral regions 40, thereby leaving a reflective metal layer 54 in the regions 40. Similarly, the metal layer 50 is neither removed from the tops of the plasmonic nanostructure elements 21 or at the surrounding base of the plasmonic nanostructure elements, thereby leaving metallic nanodiscs 51 atop the corresponding nanopillars and leaving a metal base 52 surrounding the nanopillars 52.

Figure 10 shows a security device component 100 produced according to the method of Figures 9A to 9E. Here, the appearance of the device is defined by the regions 20, 30 and 40 in combination. The region 20, which comprises an array of functioning plasmonic nanostructures, defines a coloured star in the centre of the security device component (although, again, any image could be defined). Surrounding the star is region 40, which appears as a reflective metallic region owing to the metal layer 50 being received on a substantially flat surface in this part of the security device component and defining reflective metal portions 54 of the remaining metal layer. Finally, an outer border region 30 is defined by the reduced-metallising relief elements 31, delimiting a security device area made up by the regions 20 and 40. The reduced-metallising relief elements in region 30, again, provide the region with a substantially transparent appearance for the reasons described above.

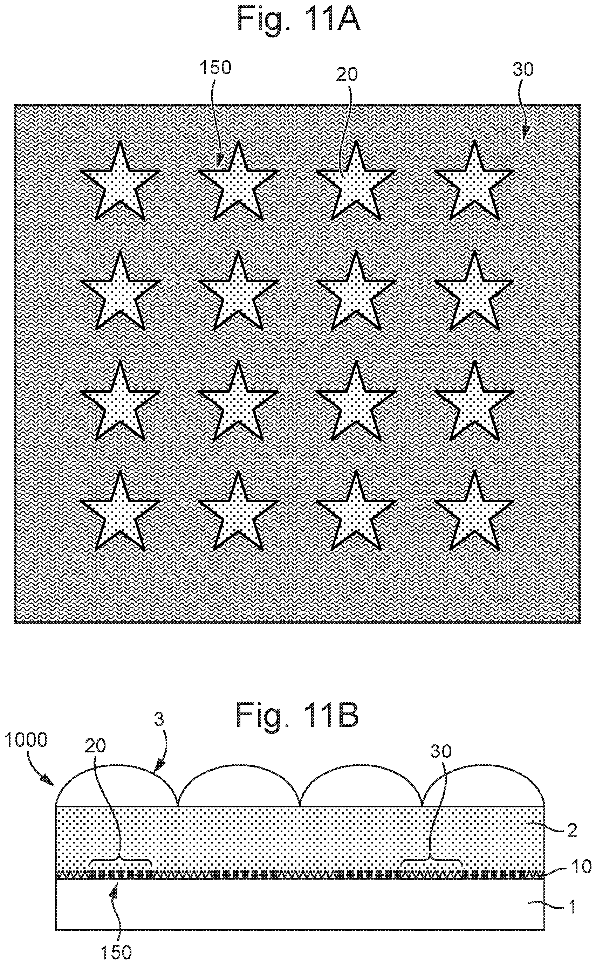

The above embodiments have illustrated, generally, how the present techniques can be used to form coloured regions of a security device component. As mentioned above, these techniques can be used to simply generate macroscopic coloured images, but more preferably the techniques are used to generate microimages or microimage elements for use in optically variable security devices. One example of such a device will now be described with reference to Figures 11A and 11B, which illustrate a security device in the form of a moiré magnification device formed using the above techniques. Figure 11A shows an array of microimages 150 formed by an array of regions 20 comprising functioning plasmonic nanostructures. The regions 20 positively define, in this case, an array of identical stars. The region 30, provided by the reduced-metallising relief elements 31, surrounds the regions 20, providing the background to the microimage array. While this arrangement is selected for this embodiment, it will be appreciated that it would be equally viable to provide the stars using the reduced-metallising relief elements 31 and the background using the functioning plasmonic nanostructures. As shown in Figure 11B, the layer 10 may be used as the microimage layer in a moiré magnification device. In this case, the transparent support layer 1, on which the cured curable material 10 and remaining metal layer 50 are provided, act as the base of a security device 1000. A transparent cover layer is provided over the relief structure formed in the cured curable material 10 and this transparent cover layer also acts as a spacer layer, spacing the microimages from an array of microlenses 3. The microimages 150 provided by the regions 120, comprising functioning plasmonic nanostructures and the lenses 3 cooperate in the manor described above with reference to Figures 1A and 1B to form a functioning moiré magnification security device.

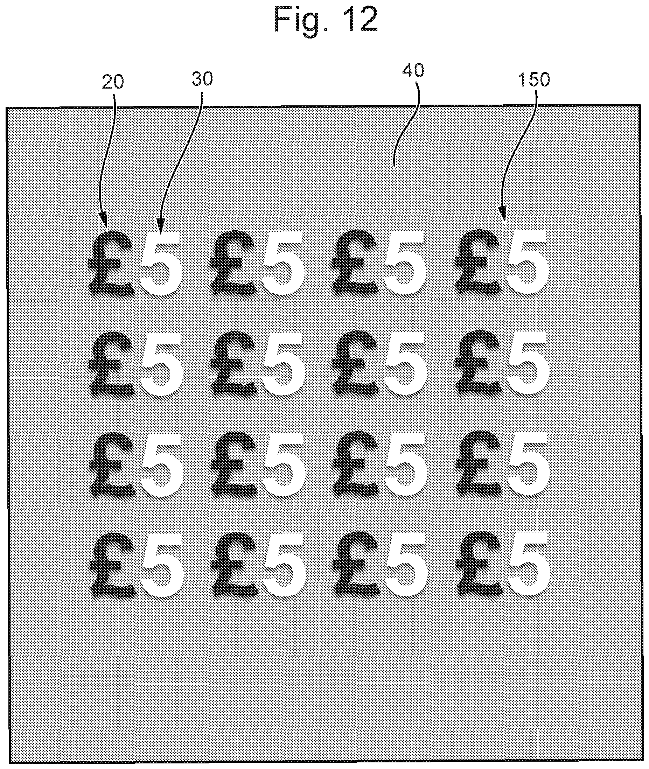

Figure 12 shows an alternative microimage array 150 for use in a security device component for a moiré magnification security device. In this embodiment, the casting mould is adapted to form regions 20, 30 and 40 (plasmonic regions, demetallised regions and neutral regions respectively) defining the microimages 150. Specifically, each microimage 150 comprises a portion formed by the array of functioning plasmonic nanostructures in region 20 and a portion formed by a transparent region provided by reduced-metallising relief elements 31 in region 30. These portions are defined against a reflective metallised background provided by region 40. In this case, each microimage 150 defines the characters "£5". The pound symbol ("£") of each microimage 150 is positively defined by a region 20 of functioning plasmonic nanostructures. The pound symbol is defined against a background 40 provided by neutral areas in the form of a uniformly flat metallised surface. Similarly, the five symbol ("5") of each microimage is positively defined by region 30 of reduced-metallising relief elements against the background provided by the uniformly flat metallised neutral areas 40.

When the microimage array of Figure 12 is incorporated into a security device in order to form a moiré magnification device, and when viewed in reflection, a viewer will see prominently an array of pound symbols owing to the colour exhibited from the functioning array of plasmonic nanostructures in region 20. However, when the device is viewed in transmission, the transparent areas corresponding to regions 30 will display to the viewer the number five prominently against a background provided by the metallised regions 20 and 40. Accordingly, moiré magnification security device can be produced that have differing appearances in transmission and reflection. While the above embodiments have been described with reference to moiré magnification, it will be appreciated that the concept could also be used to produce integral image effects. Integral image effects utilise a microimage array in which the microimages vary from one to the next, each typically providing a different perspective of the same object to be displayed so that a corresponding lens array displays a three-dimensinonal object that rotates upon tilting of the security device.

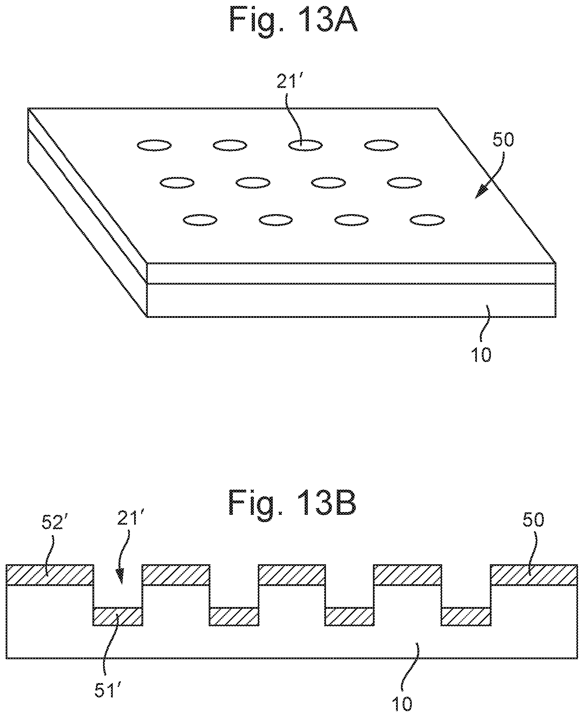

While the above embodiments have been described with plasmonic nanostructure elements in the form of nanopillars, other forms of nanostructure may also be used. Figures 13A and 13B illustrate an alternative form of nanostructure. Figure 13A shows an array of nanoholes in perspective view. As can be seen, a layer of dielectric material 10 is provided, into the first surface of which are formed an array of cylindrical recesses 21'. The layer of dielectric material is coated on its first surface with a layer of metal 50, which is received on the land areas 52' between the recesses, as well as in the base of the recesses 51', as can be seen in the cross-section of Figure 13B. This structure produces plasmonic colour effects in much the same way described above with respect to nanopillar structures. Again, the shape of the recesses, the size of the recesses and their spacing can be varied in order to control the colour generated by these plasmonic nanostructures.

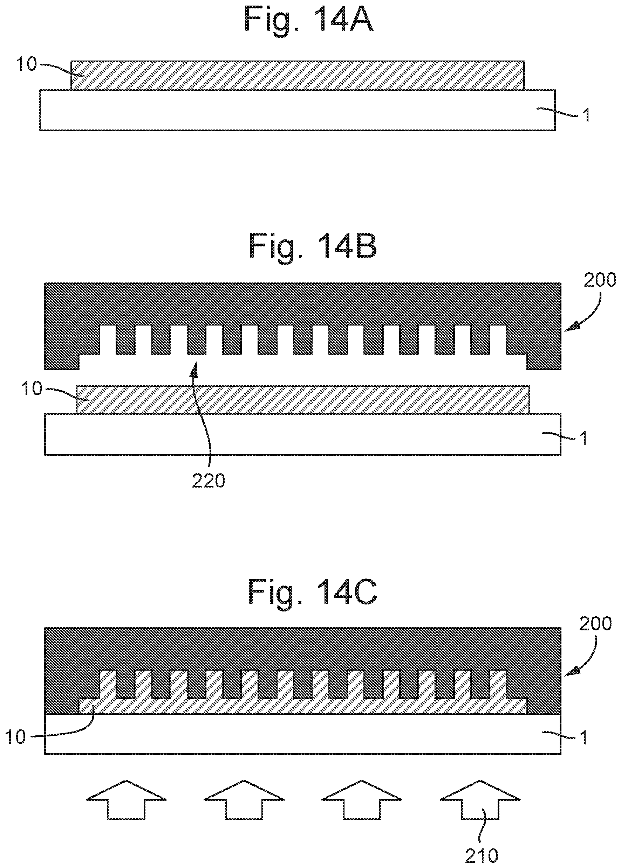

An alternative method of forming a security device component will now be discussed with reference to Figures 14A to 16.

This method first requires an array of functioning plasmonic nanostructures to be provided. Figure 14A shows a transparent support layer 1 onto which is applied a curable dielectric material 10, which may be the same as discussed above with respect to Figure 4A.

Figure 14B shows a casting mould 200, which has in its casting surface a relief structure 220 defining an array of plasmonic nanostructure elements. In this case, the casting surface defines a uniform array of plasmonic nanostructure elements, which would be suitable for exhibiting a uniform colour across the whole of the cast area.

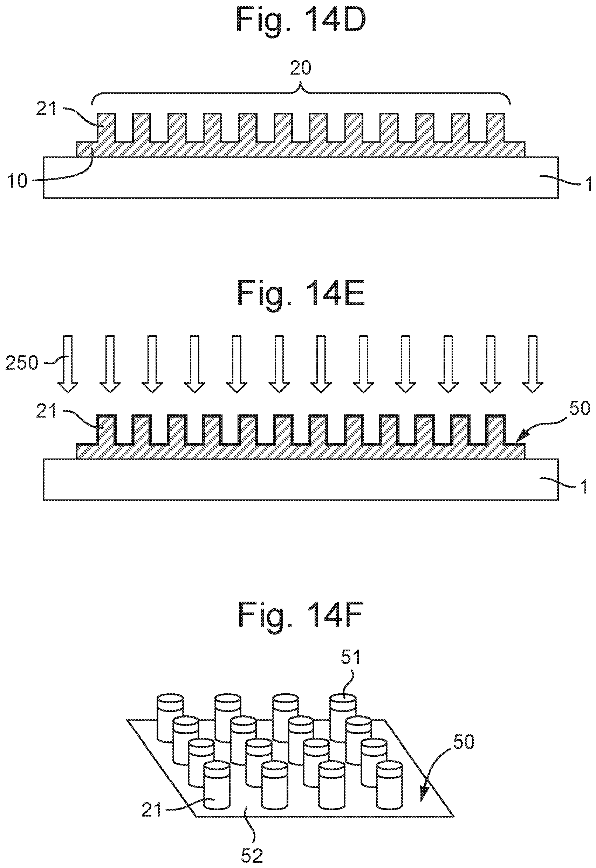

Figure 14C shows the casting mould 200 being brought into contact with the curable material 10 on the support layer 1. This forms the curable material 10 so that its first surface follows the relief structure 220 defined by the casting surface. While the casting mould 200 is in contact with the curable material 10, the curable material is exposed to UV radiation 210 through the transparent support layer 1. This fixes the curable material, thereby ensuring that it retains the array of plasmonic nanostructure elements defined by the casting surface. The resulting cured material 10 is shown in Figure 14D. Here, a region of the security device component 20 that is substantially the whole area of the cured curable material 10 comprises the uniform array of plasmonic nanostructure elements 21.

Figure 14E shows this cured curable material 10 as it undergoes a directional coating process 250 which deposits a metal layer 50 onto the first surface of the cured curable material. Again, this directional coating process 250 may be performed in the manner described above with respect to Figure 4.

Figure 14F shows the resulting nanostructures that are arranged across the first surface of the cured curable material 10. As shown in this Figure, the plasmonic nanostructures are again a two dimensional array of nanopillars 21, each of which has atop the nanopillar a metallic nanodisc 51. Further, the metal layer 50 provides a coating of metal 52 at the bases between the nanopillars. In this embodiment, each nanopillar has substantially the same dimensions and substantially the same spacing with respect to the other nanopillars such that the array of functioning plasmonic nanostructures is uniform and exhibits a uniform colour across the security device component. However, this is not essential, and the nanostructure elements may vary in shape, size and spacing so that different colours are exhibited by different regions. Similarly, the nanostructure elements may vary in shape, size and spacing or so that the plasmonic nanostructures have a polarisation dependent effect, or so as to vary the degree of scatter about the specular direction.

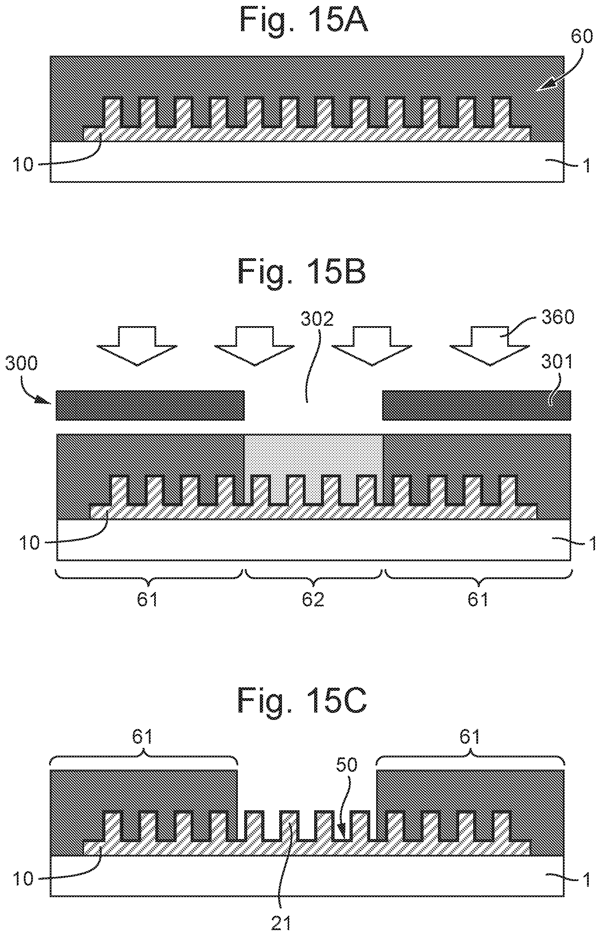

In the next stage of this method, the metal layer is selectively removed from the array of functioning plasmonic nanostructures so that they no longer function in certain areas. This is shown in Figures 15A to 15E.

Figure 15A shows the security device component, which has received a layer of resist material 60 applied across the whole surface of the security device component. The resist material 60 is responsive to radiation of a particular wavelength, typically one or more ultraviolet wavelengths e.g. 350 to 450 nanometers.

Figure 15B shows the security device component with coated resist layer 60 being exposed to the appropriate radiation 360 through a patterned mask 300. Specifically, the patterned mask 300 is arranged directly over the security device component and comprises one or more opaque regions 301 and one or more transparent regions 302 that together define the desired pattern that should be exhibited by the security device component. As the resist material 60 is exposed to the appropriate radiation 360 through the patterned mask 300, regions of the resist 61 that lay beneath the opaque regions of the mask 301 are substantially not exposed to the radiation 360 and so the resist material undergoes no change. On the other hand, regions of the resist material that underlie the transparent parts of the patterned mask 302 react under exposure to the radiation 360. In this embodiment, the resist material 60 is a "positive" resist material, meaning that the material reacts on exposure to the radiation 360 to become soluble (or more soluble) in a selected etchant. For example, the photochemical reaction may cause a reduction in cross-linking within the resist material 60 ("photo-disassociation"), resulting in the increased solubility. As a result, the exposed regions of the resist material 62 have increased solubility in an etchant substance relative to the non-exposed regions 61.

Figure 15C shows the security device component after exposure to a first etchant material. As shown in Figure 15C, the result of the exposure of the security device component to the first etchant is that the exposed regions 62 of the resist material 60 are removed from the security device component, thereby exposing corresponding regions of the underlying array of functioning plasmonic nanostructures. Meanwhile, the non-exposed regions 61 of the resist material 60 are substantially not removed from the surface of the security device component, thereby leaving corresponding regions of the array of functioning plasmonic nanostructures unexposed. In this embodiment, the first etchant is suitable for removing exposed regions 62 of the resist material 60, but does not remove the metal layer 50 located on the first surface of the cured material. Therefore, at this stage, the exposed resist material is removed, while the metal layer coating the cured material 10 remains. For example, where the metal is aluminium, a first etchant (sometimes referred to as a resist developer) for removing the resist would be the Shipley 303 developer. This resist developer will remove exposed areas of corresponding resists, such as diazonapthaquinone (DNQ)-based resist materials, from the surface. This etchant will also begin to remove the aluminium, but at such a slow rate that the exposed resist will be fully removed before significant etching of the aluminium has occurred.

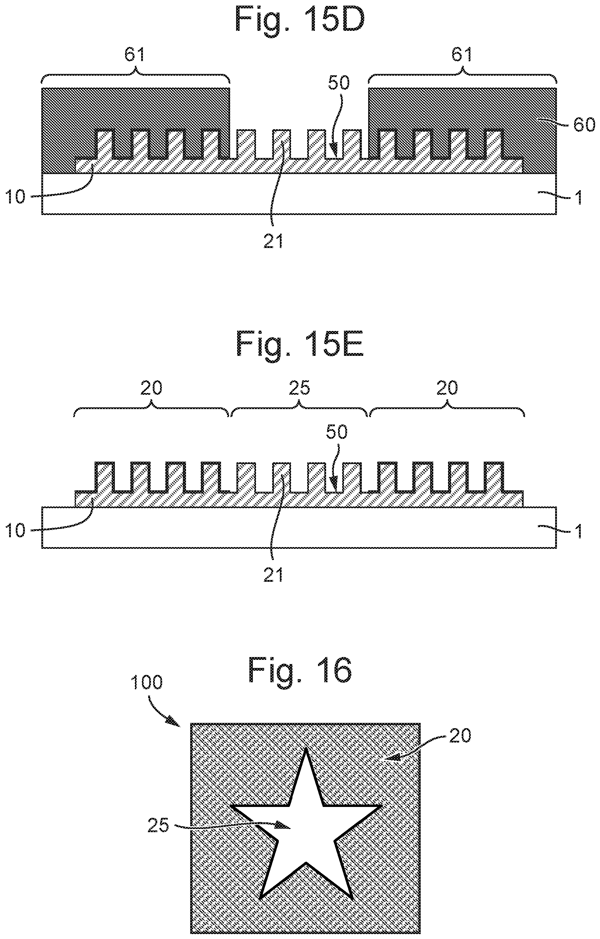

The security device component is subsequently exposed to a second etchant that is suitable for removing exposed areas of the metal layer 50. The result of this etching process is shown in Figure 15D. Here, the metal layer 50 is completely removed from the cured curable material 10 in the regions that are not covered by resist material. However, the unexposed resist material 61 that remains on the security device component protects the underlying metal layer 50 from this second etchant.

An alternative set of materials for the above embodiment would be a copper layer as the metal layer and a diazonapthaquinone (DNQ)-based resist material, such as 1,2-Napthoquinone diazide as the resist material. For this set of materials, an alkaline (caustic) first etchant will remove the resist material without removing the copper layer, and subsequently an acidic second etchant may remove the metal layer exposed upon removal of the resist.

The non-exposed elements of the resist could remain in-situ in the finished product. However, to reduce the finished thickness of the structure it is preferable to remove them. Figure 15E shows the security device component after removal of the unexposed areas 61 of the resist material. The unexposed areas 61 may be removed, for example, by exposing the security device component to a third etchant that is suitable for removing the unexposed resist material, such as methyl ethyl ketone (MEK) where the resist is a diazonapthaquinone (DNQ)-based resist. Another suitable resist developer would be Microposit 303. Alternatively, the whole security device component may be exposed to the appropriate radiation in order to increase the solubility of the remaining resist material 60. After the remaining resist material 60 is exposed to radiation, the first etchant material may be applied again to remove the remaining resist material 60. As shown in Figure 15E, the result is the security device component comprises region 20 in which the plasmonic nanostructure elements 21 retain their metal coating and regions 25 in which the plasmonic nanostructure elements 21 are substantially uncoated by any metal layer. The region 20 comprising the metal layer retains an array of functioning plasmonic nanostructure elements suitable for exhibiting colour when viewed in reflection. The regions 25, without the metal layer, no longer have the metal layer necessary for plasmonic reactions to occur and so these regions will exhibit no plasmonic colour in reflection. The regions 20 and 25, with and without functioning plasmonic nanostructures, matches the pattern defined in the pattern mask 300. Specifically, the transparent portions of the mask 302 will define the demetallised regions 25 in the final security device component, while the opaque portions of the mask 301 will define the regions 20 retaining the metal layer and thereby retaining a functioning array of plasmonic nanostructures in the final security device component.

Figure 16 illustrates the appearance of the final security device component 100. Here, the region 20 of functioning plasmonic nanostructures provide a coloured background and negatively define a star-shaped region 25 of non-functioning plasmonic nanostructures. In this embodiment, the pattern produces an image on the macro scale suitable for viewing with the unaided eye in reflection. The pattern formed in this embodiment is relatively simple; however, it will be appreciated that complex patterns may be produced using the above method, i.e. by using a more complex patterned mask.

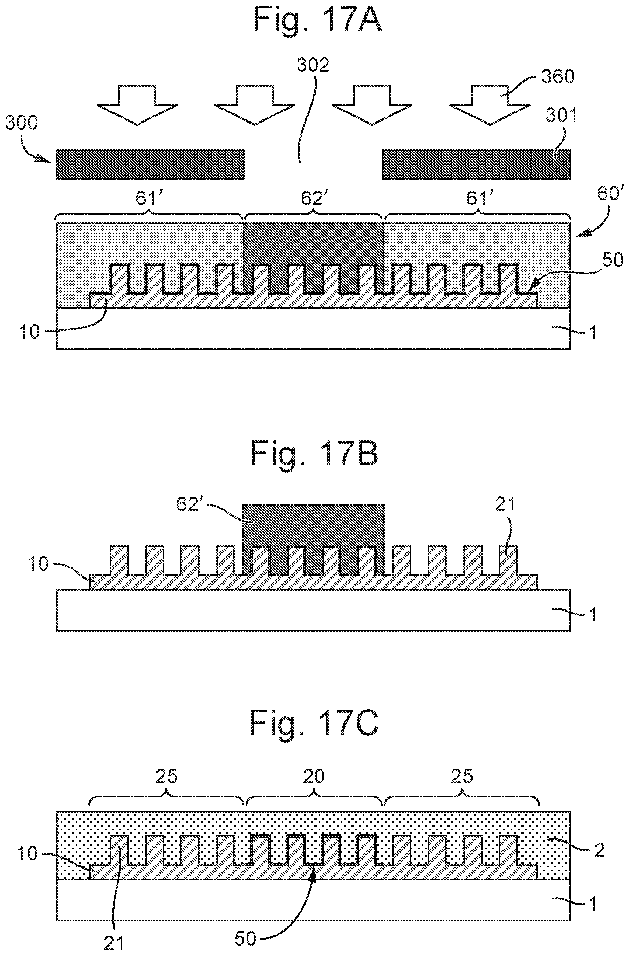

Another embodiment will now be described with respect to Figures 17A to 18. Figure 17A shows a security device component comprising a functional array of plasmonic nanostructures that has been coated with a resist material 60'. The support layer 1 and layer of cured curable material 10 carrying plasmonic nanostructure elements 21 and metal layer 50 may be formed as described above with respect to Figure 14.

The resist material 60' applied over the entire surface of the security device component is, in this embodiment a "negative" resist, meaning that the material reacts on exposure to appropriate radiation to become less soluble or insoluble in the corresponding etchant. For example, the photochemical reaction may cause cross-linking within the resist material, resulting in the decreased solubility.

As shown in Figure 17A, the security device component with resist material 69 is exposed to the required radiation 360 through a patterned mask 300. The patterned mask again comprises opaque regions 301 and transparent regions 302. The result of this exposure is that regions 61' that correspond to the opaque areas 301 of the patterned mask 300 are not exposed to the radiation 360 and so remain relatively soluble in the selected etchant. On the other hand, regions of the resist material 62'that correspond to the transparent areas 302 of the patterned mask 300 become relatively insoluble areas 62' of the resist material 60'.

Figure 17B shows the security device component after exposure to an etchant. In this embodiment the etchant is suitable for removing the relatively soluble unexposed areas 61' of the resist material 60'. The etchant material is also suitable for simultaneously removing metal layer 50 as it becomes exposed upon removal of the resist material 60'. Suitable resist materials 60' and etchant material for this embodiment include those listed above as resists with corresponding alkaline etchants. As mentioned, an alkaline etchant will remove a metal such as aluminium, although at a relatively slow rate.

The result of the above steps is that the metal layer and the resist material are removed from the security device component in areas that correspond to the opaque areas 301 of the patterned mask 300. These areas of the security device component therefore no longer comprise a functioning array of plasmonic nanostructures, as the required metal layer 50 has been removed.

Subsequently, the exposed region 62' of the resist material 60' may be removed. This may be achieved by use of a further etchant suitable for removing the exposed areas of the resist 60'; however, its etchant should not remove the metal layer 50 that remains on the cured curable material 10 beneath the exposed resist material 60'. Any non-alkaline resist etchant would be suitable for removing a corresponding resist without removing, for example, an aluminium metal layer.

The final security device component is shown in Figure 17C. This shows that the exposed resist material 62' is removed from the security device component, revealing a still-intact functioning array of plasmonic nanostructures. Subsequently, a transparent cover layer 2 has been applied across the full surface of the security device component. This transparent cover layer 2 conforms to the array of plasmonic nanostructure elements and ensures the colours exhibited by the functioning plasmonic nanostructure can be visualised therethrough. Furthermore, the clear cover layer 2 may be selected to have a refractive index substantially the same as the refractive index of the cured curable material 10 such that the regions 25 in which the metal layer 50 has been removed are substantially transparent.

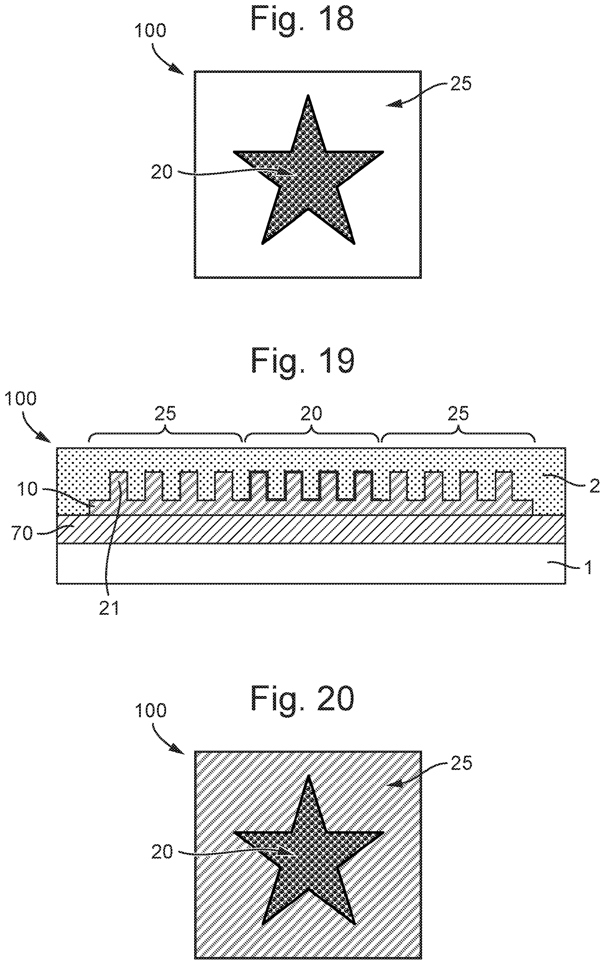

The appearance of the final security device component 100 is shown in Figure 18. Here, region 20, which corresponds to the transparent areas of the patterned mask 300 comprise a functioning array of plasmonic nanostructures that exhibit the predetermined colour. Here, the region 20 of functioning plasmonic nanostructures positively defines an image of a star against a transparent background provided by the region 25, in which the plasmonic nanostructure element 21 are devoid of the metal layer required to function.

A further embodiment will now be described with reference to Figures 19 and 20.

Figure 19 shows a final security device component 100. This security device component is formed substantially the same manner described above with reference to Figures 14A to 14E and 17A to 17C. However, instead of the curable layer 10 being disposed directly on the support layer 1, the curable dielectric material 10 is applied onto a further layer 70 located on the support layer 1. This further layer 70 may be, for example, a colour print layer, an optically variable structure, such as a hologram, a fluorescent or phosphorescent material, or a colour-shifting layer, such as an interference thin film structure. If this further layer 70 is substantially opaque, it may be necessary to form the initial array of plasmonic nanostructure elements 21 by cast curing using a transparent casting mould 200, such as quartz or polycarbonate casting mould.

The result of the present arrangement is that areas of the security device component 25 in which the metal layer 50 is removed from the surface of the cured curable material exhibit the optical properties of the further layer 70. That is, the clear cover layer 2 and the demetallised plasmonic nanostructure elements in the cured curable material 10 are substantially transparent such that the underlying further layer 70 is visible through the layers in those demetallised regions 25.

Figure 20 shows the appearance of this security device component and illustrate that region 20, in which an array of functioning of plasmonic nanostructures is maintained, exhibit a colour generated by that array of functioning plasmonic nanostructures. The areas 25, in which the metal layer has been removed, on the other hand, allow the further layer located beneath the curable material 10 to be visualised. In this embodiment, region 20 positively defines a star whose colour is determined by the plasmonic nanostructures visible against a background whose appearance is defined by the further layer 70. As mentioned above, the further layer could comprise another array of functioning plasmonic nanostructures; however, preferably, the further layer has optical properties that provide a striking difference relative to the maintained array of functioning plasmonic nanostructures. For example, an optically variable further layer may be used to significantly improve security.

The above concept of utilising a further layer 70 that is made visible through transparent regions of the cured curable material 10 is particularly useful for security device components comprising microimages or microimage elements for use in a lens-based security device.

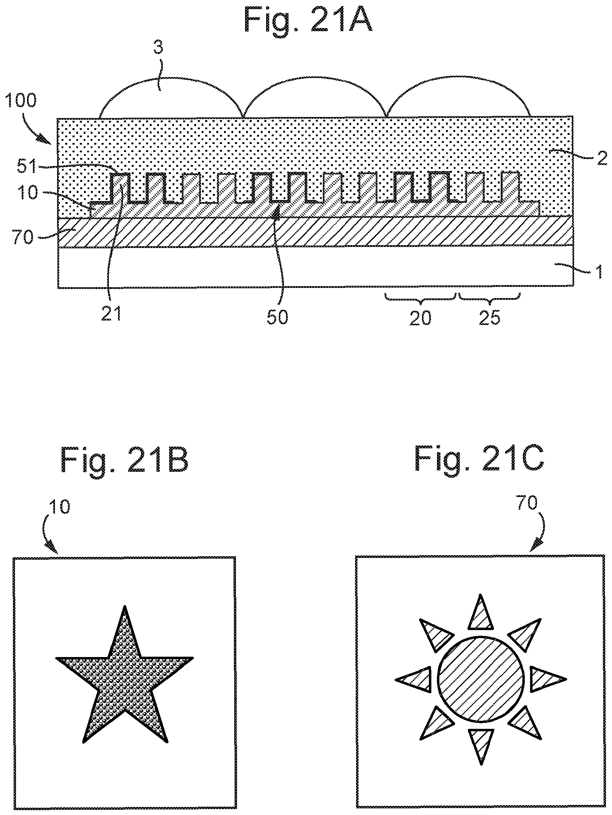

Figures 21A to 21F illustrate a lenticular security device utilising a further layer 70.

Figure 21A shows a transparent carrier layer 1 onto which was applied to the further layer 70. On top of the further layer 70 is provided the layer of cured curable material whose first surface defines an array of plasmonic nanostructure elements 21. A transparent cover layer 2 is provided over the layer of cured curable material 10 and separates the plasmonic nanostructures and the further layer 70 from an array of cylindrical microlenses 3. The array of plasmonic nanostructure elements 21 have been demetallised using the above techniques to form an array of interlaced strip regions 20, 25. Regions 20 comprise the nanostructure elements 21 retaining their metal layer 50 such that they define an array of functioning plasmonic nanostructures that exhibit the desired colours. The regions 25 have been demetallised such that the plasmonic nanostructure elements 21 lack the metal layer needed to function. These regions 25 are transparent owing to the matched refractive indices between the cured material 10 and the transparent cover layer 2, revealing the underlying further layer 70. Each cylindrical microlens 3 overlies one region of functioning plasmonic nanostructures 20 and 1 transparent region 25 that reveals the underlying further layer 70 to form a two-channel lenticular device. While a two-channel lenticular device is provided here, this is merely for clarity of demonstration. The very high resolution providable by these types of structure allow a higher number of channels for a given lens diameter than is achievable using, for example, print. Further, the structures ensure image generating information content (i.e. colours from plasmonic structures, and presence and absence of metal in other regions) in each of the channel strip patterns is mutually registered with that of all other strip patterns. Only one of the strip patterns needs to be demetallised to access the colour effect present in layer 70.

Figure 21B shows the image carried by the array of plasmonic nanostructure elements. That is, the plasmonic nanostructure elements are modulated to define an image of a star in two colours, although more complex images could be defined. Figure 21B shows, effectively, the appearance of the cured curable material 10 and metal layer 50 prior to the selective demetallisation of the structure.

Figure 21C shows the appearance of the further layer 70, which in this case is a printed image of a sun.

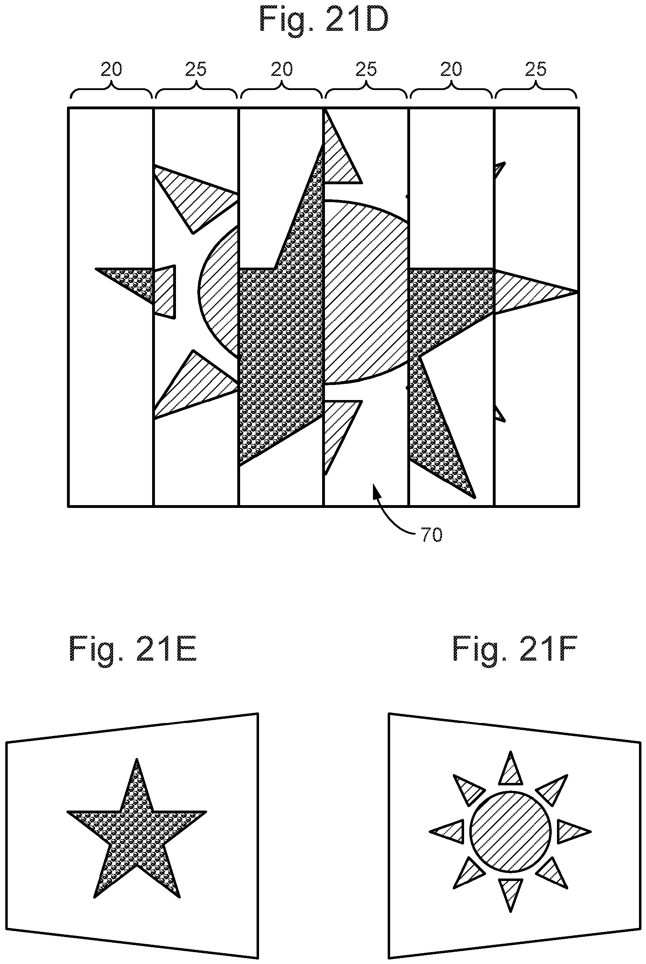

Figure 21D shows the appearance of the security device component after the metal layer 50 has been selectively removed in the above described process, but before application of an array of microlenses. Here it can be seen that the security device component comprises an array of interlaced regions 20 and 25. Each region 20 exhibits a corresponding portion of the image shown in Figure 21B, i.e. the star, while each region 25 reveals the underlying further layer 70, thereby exhibiting portions of the image of the sun. Figures 21A and 21D show the security device component as comprising only 6 interlace regions 20 and 25; however, it will be appreciated that this is for the purpose of illustration only and, in practice, a lenticular security device component will comprise many interlace image strips.

Figures 21E and 21F illustrate the appearance of the final security device, i.e. with the lens array 3 applied over the above security device component, when viewed at two different angels. Figure 21E shows the security device when held at an angle such that each microlense 3 directs light from the corresponding region 20 comprising the functioning plasmonic nanostructures. The result is that the security device displays the star shown in Figure 21B to the viewer. Figure 21F illustrates the security device rotated to a position such that each microlense 3 directs light from a corresponding region 25 in which the plasmonic nanostructure elements are non-functioning and the cured material transparent, revealing the further layer 70. In this arrangement the security device has the appearance of the sun shown in Figure 21C owing to the further layer 70 being revealed to the viewer.

The above embodiment is particularly advantageous as the image contained in the further layer 70 will be integrally registered to the gaps in the array of functioning plasmonic nanostructures, i.e. because they are only revealed where functioning plasmonic nanostructures are absent.

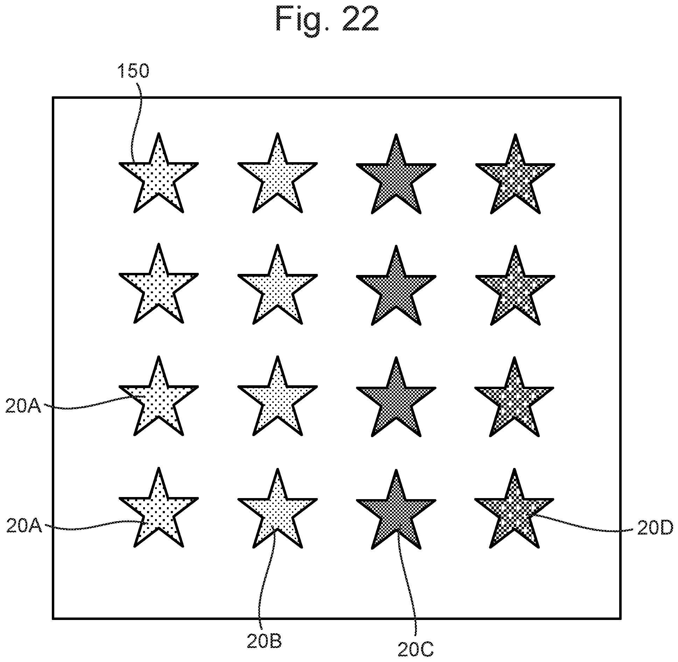

Figure 22 shows a further embodiment of a security device component. In this embodiment, instead of the plasmonic nanostructure elements 21 being uniform across the security device component, the properties of the plasmonic nanostructure elements 21 are varied gradually across the security device component. For example, the spacing of the plasmonic nanostructure elements 21 may vary gradually across the security device component. In this embodiment, the patterned mask 300 is used to define an array of microimages 150 that are identical in shape, in this case each being a microimage of a star.

However, the gradual change in the colour exhibited by the functioning plasmonic nanostructures results in the microimages gradually changing colour across the security device component. For example, a first column of microimages 150 are defined by regions 20A of functioning plasmonic nanostructures having substantially a first colour. An adjacent column of microimages are defined by regions 20B, in which the plasmonic nanostructures have a slightly different colour. Similarly, additional columns formed by regions 20C and 20D have respective different colours. While only four columns are shown here, it will be appreciated that a typical moiré magnification device will comprise many more microimages, and the colour variation from one to the next will therefore be more gradual. This embodiment of security device component is advantageous when compared with, for example, printed microimages, as it is particularly difficult to achieve accurate register when printing microimages in varying colours. Indeed, the moiré effect requires careful control over the relative positioning of the individual microimage such that the type of effect exhibited in this embodiment would not be practical using printed microimages. In this embodiment, owing to the colours of the functioning plasmonic nanostructure colours originating from a single cast cure process (i.e. by the spacing defined in the casting mould), and the positions of the microimages being defined by a single exposure step through a mask that may be formed in a single process, the microimages will be integrally registered with one another, while still varying in colour. While a gradual colour change is used as the example here, it will be appreciated that much more complex variations may be used to produce more visually striking effects. For example, each coloured star could have sub-detail (for example much smaller stars or an array of ‘5’s). In some embodiments, the colour of such sub-detail could also vary across the array. For example, the stars may have a background colour that varies across the array as shown in Figure 22,e.g. from red to blue, while the sub-detail (such as an array of ‘5’s within each star) may also vary in colour across the array, e.g. from blue to red.

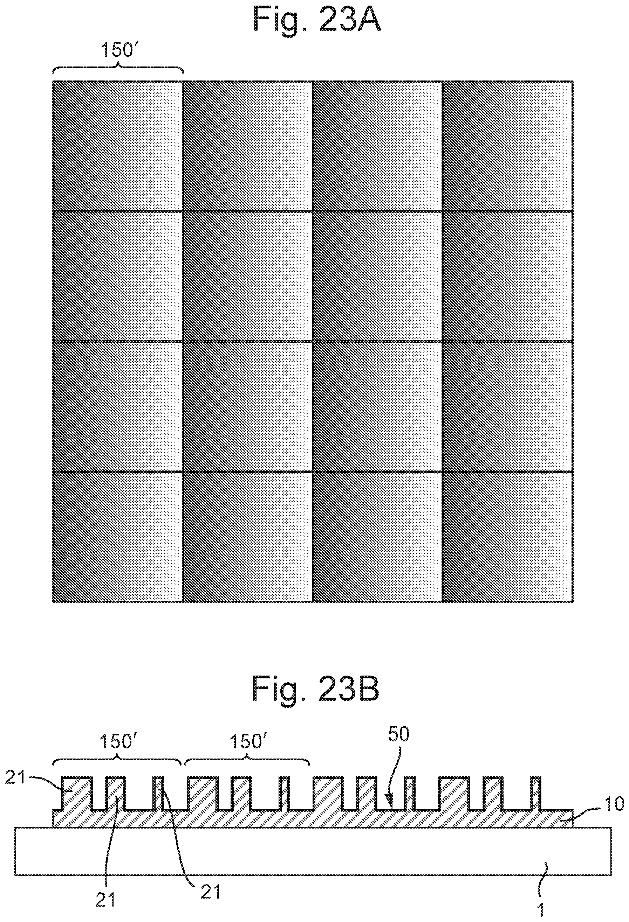

A further embodiment will now be described with reference to Figures 23A to 23C.

Figure 23A shows the pattern formed in the array of plasmonic nanostructure elements that are cast into the surface of the cured curable material 10. Here, the functioning plasmonic nanostructures are arranged across an array of microimage regions 150’. The array of microimage regions 150’ are arranged in a two-dimensional grid, with each microimage region abutting adjacent microimage regions. Each microimage region 150’ exhibits a gradual change in colour from one colour to another across the microimage region, for example blue to yellow. Again, this colour variation may be provided by varying the properties of the plasmonic nanostructure elements defined by the casting mould across the security device component. In this case, the size and spacing of the plasmonic nanostructure elements 21 are varied across each microimage region 150’.

Figure 23B shows a cross-section through the security device component prior to any demetallisation process. Here, it can be seen that the plasmonic nanostructure elements 21 vary in size and spacing across each microimage region 150’ to provide the gradual change in colour.

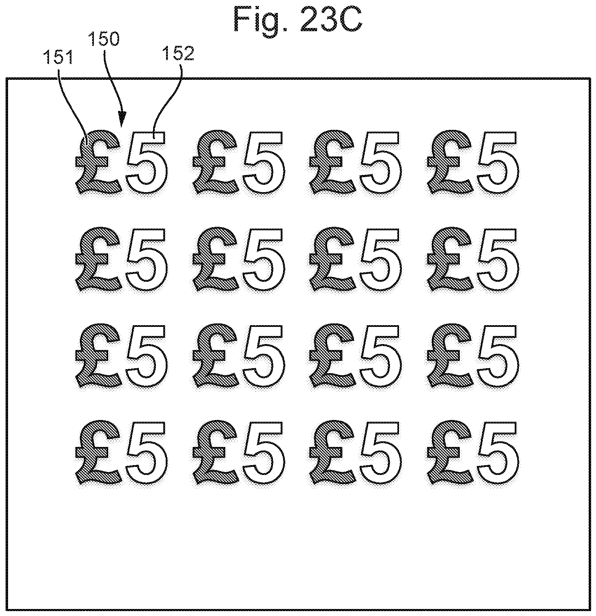

The above described demetallisation process is then carried out with a patterned mask 300 that is arranged to define a microimage in each microimage region 150’. Figure 23C shows the final security device component. Here, each microimage is a symbol "£5" defined against a demetallised background. Owing to the gradual colour variation across each microimage region 150’, the symbol "£5" comprises a first part 151, which is a pound symbol "£" and a second part 152, which is a numeral five "5". The first part 151 of the microimage 150 has a first colour different from a second colour of the second part of the microimage 152. For example, the pound symbol "£" may be a substantially blue colour, while the numeral five "5" may be a substantially yellow colour. Accordingly, the present method has provided microimages that are individually multi-coloured, which is very difficult to achieve with means such as printed microimages. While this embodiment describes a gradual colour change across a microimage region, any colour variation may be used. For example, each microimage region 150’ could gradually vary so that there is no abrubt colour change at the boundary between microimage regions 150’, e.g. by varying from a yellow centre gradually to a blue perimeter for each microimage region. Alternatively, the each microimage region 150’ could comprise a uniformly blue half and a uniformly yellow half, or could exhibit more complex colour variations. An advantage of a gradual colour change is that any misregister of the mask during the exposure step is less visible in the final security device as a microimage will not span a hard boundary between two different colours.

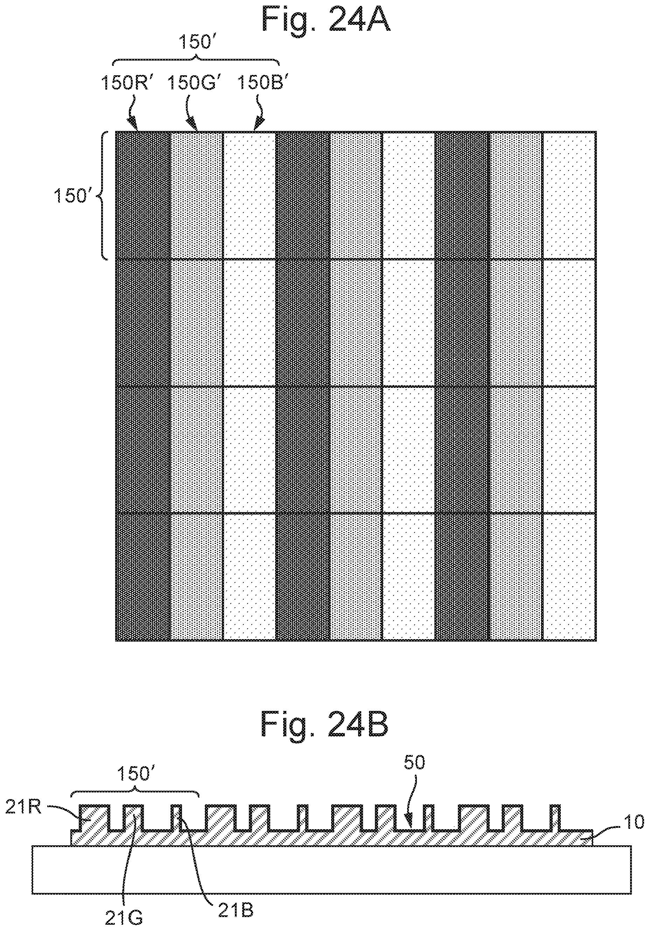

A further embodiment will now be described with reference to Figures 24A to 24D.

Figure 24A shows the arrangement of the functioning plasmonic nanostructures initially formed in the layer of cured curable material 10 i.e. prior to demetallisation. Here, the functioning plasmonic nanostructures define an array of image regions 150’ arranged on a regular grid along two directions. Each image region 150’ defines a colour pixel and comprises a red, green and blue channel 150R’, 150G’, 150B’. That is, each image region 150’ comprises a sub-region 150R’ in which the functioning plasmonic nanostructures provide a red colour, a sub-region 150G’ in which the functioning plasmonic nanostructures provide a green colour, and a sub-region 150B’ in which the functioning plasmonic nanostructures provide a blue colour. Each sub-region makes up approximately one third of the area of each image region 150’. The array of functioning plasmonic nanostructures thereby defines an array of red, green and blue regions interlaced along one direction of the regular grid on which the image regions 150’ are arranged.

Figure 24B shows this security device component in cross-section, again before demetallisation. As shown schematically, again, the different colours in the red, green and blue sub-regions 150R', 150G', 150B' are provided by varying the size and spacing of corresponding plasmonic nanostructure elements 21R, 21G, 21B. That is, each red sub-region 150R' has an array of plasmonic nanostructure elements 21R with a first size, shape and spacing such that a red colour is exhibited. Similarly, the green and blue sub-regions 150G', 150B' have plasmonic nanostructure elements 21G, 21B with respective sizes, shapes and spacings defining green and blue respectively.

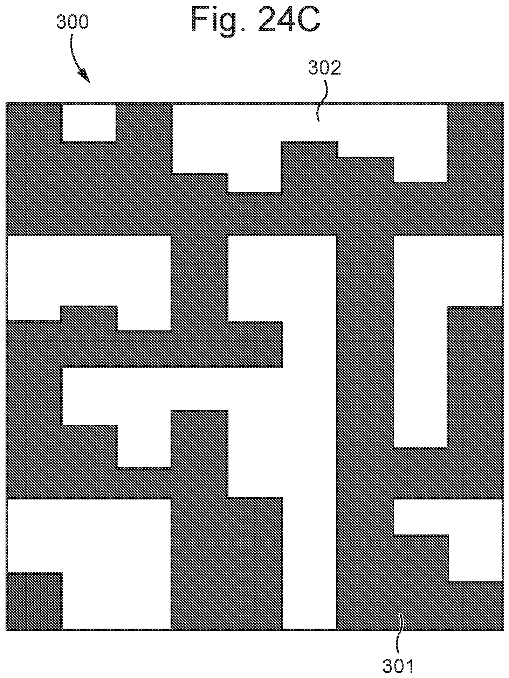

Figure 24C shows a patterned mask 300 that may be used when demetallising the above described plasmonic nanostructure array. The patterned mask 300 again comprises opaque regions 301 and transparent regions 302. The mask in this embodiment is designed for use in combination with a negative resist so as to demetallise a certain proportion of the red, green and blue sub-regions within each image region 150'. That is, for any one image region 150', the mask will define red, green and blue values for the final pixel by demetallising a proportion of the red, green and blue sub-regions as determined by a desired pixel colour for the corresponding location of the final image. The mask thereby defines an array of pixels with individual colour values determined by the amount of remaining functioning plasmonic nanostructures defining red, green and blue. This can therefore be used to produce full colour images through a selective demetallisation process.

It will be noted that this embodiment may require precise register control in one axis, i.e. in the direction in which each image regions varies between the red, green and blue sub-regions, and precise rotational register. This will ensure that the mask area intended to define, for example, the proportion of red in a certain pixel does not to any substantial degree influence adjacent green and blue sub-regions through misregister. This can be achieved particularly in continuous inline processes, e.g. where the initial functioning array of plasmonic nanostructures is provided as part of a continuous web such that register need only be controlled in a direction transverse to the web. Such web based systems offer good control over rotational alignment by their very nature, and also provide means for controlling transverse register, including, for example, feedback systems.

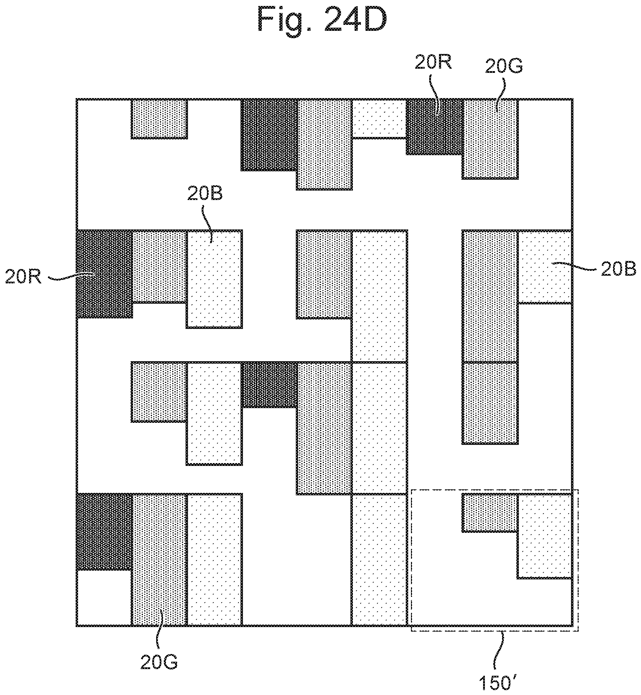

Figure 24D shows the security device component after undergoing demetallisation using a negative resist material. The result is a plurality of pixels with indivifual colour values defined by the size of the remaining red, green and blue sub pixels 20R, 20G, 20B within each image region 150'. These colour pixels may be used to collectively define a full colour image.

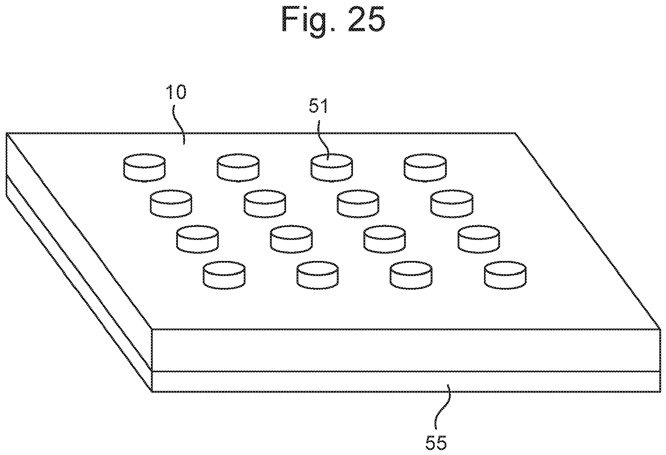

The above described embodiments which utilise a resist material have been described as comprising plasmonic nanostructure elements in the form of nanopillars. However, this method could also utilise other forms of plasmonic nanostructure elements. For example, the nanoholes shown and described in relation to Figures 13A and 13B may be used in the present method. The embodiments comprising the use of a resist material, however, can also utilise a further type of plasmonic nanostructure which does not rely on a relief structure formed in a cured dielectric material. Such a plasmonic nanostructure is shown in Figure 25.

This nanostructure array comprises a metallic base layer 55 that covers a full surface of the security device component. Provided on top of the metal base layer 55 is a continuous dielectric substrate layer 10, which does not carry any relief structure. An array of metallic nanodiscs 51 are then provided on top of the dielectric material 10. These nanodiscs may be formed, for example, by metallising the entire first surface of the dielectric material 10 and subsequently demetallising the surface to form the array of nanodiscs 51. The resist material 60 or 60' described above may then be applied over this array of metallic nanodiscs, and exposure and etching steps performed as described above to remove the remaining metal in order to destroy the functioning nanostructures in desired regions.

As mentioned above, the present invention is directed to security device components and methods of manufacturing security device components. It has been demonstrated above how these security device components can be implemented in security devices, with examples of moiré magnification security devices and lenticular security devices being described. It will be appreciated that these security devices will typically be integrated into security documents and some ways in which this can be achieved will now be described.

Security devices using security device components of the sorts described above can be incorporated into or applied to any product for which an authenticity check is desirable. In particular, such devices may be applied to or incorporated into documents of value such as banknotes, passports, driving licences, cheques, identification cards etc. The security device can either be formed directly on the security document (e.g. the transparent support layer of the above embodiments could be a polymer substrate forming the basis of the security document) or may be supplied as part of a security article, such as a security thread or patch, which can then be applied to or incorporated into such a document. The security device may be applied to a security document, for example by using a pressure sensitive adhesive.

Such security articles can be arranged either wholly on the surface of the base substrate of the security document, as in the case of a stripe or patch, or can be visible only partly on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP 0059056 A1. EP 0860298 A2 and WO 03095188 A2 describe different approaches for the embedding of wider partially exposed threads into a paper substrate. Wide threads, typically having a width of 2 to 6mm, are particularly useful as the additional exposed thread surface area allows for better use of optically variable devices.

Base substrates suitable for making security substrates for security documents may be formed from any conventional materials, including paper and polymer. Techniques are known in the art for forming substantially transparent regions in each of these types of substrate. For example, WO 8300659 A1 describes a polymer banknote formed from a transparent substrate comprising an opacifying coating on both sides of the substrate. The opacifying coating is omitted in localised regions on both sides of the substrate to form a transparent region. In this case the transparent substrate can be an integral part of the security device (e.g. the transparent support layer) or a separate security device can be applied to the transparent substrate of the document. WO 0039391 A1 describes a method of making a transparent region in a paper substrate. Use of full or half-window features in this way allows the security element to be applied to one side of the security document for viewing from the opposite side, through the window.

The security device may also be applied to one side of a paper substrate, optionally so that portions are located in an aperture formed in the paper substrate. An example of a method of producing such an aperture can be found in WO 03054297 A2. An alternative method of incorporating a security device which is visible in apertures in one side of a paper substrate and wholly exposed on the other side of the paper substrate can be found in WO 2000/39391 A1.

Security devices using security device components of the current invention can be made machine readable by the introduction of detectable materials in any of the layers or by the introduction of separate machine-readable layers. Detectable materials that react to an external stimulus include but are not limited to fluorescent, phosphorescent, infrared absorbing, thermochromic, photochromic, electrochromic, conductive and piezochromic materials.

When a magnetic material is incorporated into the device the magnetic material can be applied in any design but common examples include the use of magnetic tramlines or the use of magnetic blocks to form a coded structure. Suitable magnetic materials include iron oxide pigments ($Fe_2O_3$ or $Fe_3O_4$), barium or strontium ferrites, iron, nickel, cobalt and alloys of these. In this context the term "alloy" includes materials such as Nickel:Cobalt, Iron:Aluminium:Nickel:Cobalt and the like. Flake Nickel materials can be used; in addition Iron flake materials are suitable. Typical nickel flakes have lateral dimensions in the range 5-50 microns and a thickness less than 2 microns. Typical iron flakes have lateral dimensions in the range 10-30 microns and a thickness less than 2 microns.

## Claims

1. A method of manufacturing a security device component comprising:

   a) providing a dielectric substrate (1), the substrate having a first surface defining a relief structure (20,30) wherein the relief structure comprises an array of plasmonic nanostructure elements (21), the array of plasmonic nanostructure elements defining raised portions (51) and recessed portions (52) of the first surface, and an array of reduced-metallising relief elements (31(), the array of reduced-metallising relief elements defining inclined portions of the first surface having an inclination relative to the plane of the substrate greater than the inclination of the raised portions and/or the recessed portions of the first surface;

   b) directionally coating the first surface of the substrate with a metal layer (50) such that the metal layer coating the raised portions and/or the recessed portions of the first surface defined by the array of plasmonic nanostructure elements is thicker than any metal layer coating the inclined portions (53) of the first surface defined by the array of reduced-metallising relief elements, wherein the plasmonic nanostructure elements and the metal layer, in combination, provide an array of functioning plasmonic nanostructures; and

   **characterised in that** the inclined portions of the first surface and the directional coating are such that any metal layer coating the inclined portions of the first surface has a thickness of less than 15 nm; and/or further comprising

   c) etching the metal layer coated on the first surface such that any metal layer is substantially removed from the inclined portions of the first surface and remains on the raised portions and/or the recessed portions, thereby maintaining the array of functioning plasmonic nanostructures.

2. A method according to claim 1, wherein the inclined portions of the first surface and the directional coating are such that any metal layer coating the inclined portions of the first surface is at least partially transparent.

3. A method according to any of the preceding claims, wherein providing the dielectric substrate having a first surface defining a relief structure comprises:

a) i) providing a layer of dielectric material;
a) ii) forming a first surface of the dielectric material so as to define the array of plasmonic nanostructure elements and the array of reduced-metallising relief elements, wherein preferably either:

the layer of dielectric material is thermoformable and forming the first surface of the dielectric material comprises thermo-embossing the array of plasmonic nanostructure elements and the array of reduced-metallising relief elements into the first surface of the dielectric material, and preferably the array of plasmonic nanostructure elements and the array of reduced-metallising relief elements are thermo-embossed in the same thermo-embossing step; or
the layer of dielectric material is a layer of curable dielectric material and wherein forming the first surface of the dielectric material comprises casting the array of plasmonic nanostructure elements and the array of reduced-metallising relief elements into the first surface of the curable dielectric material and curing the curable dielectric material so as to fix the relief structure in the first surface of the dielectric material and preferably the array of plasmonic nanostructure elements and the array of reduced-metallising relief elements are cast in the same casting step.

**4.** A method according to any of the preceding claims, wherein the array of reduced-metallising relief elements comprises a one-dimensional array of elongate elements, the elongate elements being substantially triangular or convex in cross-section and/or wherein the array of reduced-metallising relief elements comprises a two-dimensional array of substantially conical or pyramidal surface elements.

**5.** A method according to any of the preceding claims, wherein a direction of the directional coating is substantially perpendicular to the plane of the substrate.

**6.** A method according to any of the preceding claims, further comprising:
d) applying a cover layer over the dielectric substrate such that a surface of the cover layer closest to the dielectric layer conforms to the relief structure defined by at least the array of reduced-metallising relief elements, wherein preferably the dielectric substrate and the cover layer are formed of substantially transparent materials and wherein the cover layer has a refractive index within 0.1, preferably within 0.05, of a refractive index of the dielectric substrate, preferably such that the reduced-metallising relief elements generate a non-visible effect.

**7.** A method according to any of the preceding claims, wherein the array of plasmonic nanostructure elements are provided across a first region in accordance with a first pattern such that the array of functioning plasmonic nanostructures exhibits the first pattern in reflection, wherein preferably the plasmonic nanostructure elements of the array of plasmonic nanostructure elements vary in at least one of their shape, size and spacing across the first region to provide colour variation of the first pattern, and wherein preferably the array of reduced-metallising relief elements at least partially delimits the first pattern and/or the array of reduced-metallising relief elements forms a border at least partially surrounding the first pattern.

**8.** A method according to claim 7, wherein the array of plasmonic nanostructure elements are provided across an array of first sub-regions and/or wherein the array of reduced-metallising relief elements are provided across an array of second sub-regions, wherein preferably the plasmonic nanostructure elements of the array of plasmonic nanostructure elements vary in at least one of their shape, size and spacing across at least some of the first sub-regions to provide colour variation of the first pattern.

**9.** A method according to claim 8, wherein the arrangement of the array of first sub-regions defines the first pattern visible in reflection and the arrangement array of second sub-regions defines a second pattern, the second pattern being exhibited in transmission owing to the metal layer being retained in the first sub-regions with a thickness greater than any metal layer in the second sub-regions, wherein the first pattern is a multi-coloured version of the second pattern or wherein the first pattern has a form different to a form of the second pattern.

**10.** A method according to any of claims 7 to 9, wherein the first pattern defines a first image, preferably being configured for viewing in reflection by the unaided eye.

**11.** A method according to any of claims 7 to 9, wherein the first pattern defines an array of microimages or image elements such that the array of functioning plasmonic nanostructures exhibits the array of microimages or image elements in reflection, wherein preferably the first pattern defines an array of microimages or image elements; and wherein the plasmonic nanostructure elements of the array of plasmonic nanostructure elements vary in at least one of their shape, size and spacing across the array of microimages or image elements such that microimages or image elements vary in colour across the array of microimages or image elements, and/or wherein the plasmonic nanostructure elements of the array of plasmonic nanostructure elements vary in at least one of their shape, size and spacing across at least one of the microimages or image elements such that said at least one of the microimages or image elements is a multi-coloured microimage or image element.

**12.** A method according to claim 11, wherein the first pattern defines an array of microimages and wherein the array of plasmonic nanostructure elements or the array of reduced-metallising relief elements either positively or negatively defines each image element of the array of microimages.

**13.** A method according to claim 11 or claim 12, further comprising:
e) providing an array of focussing elements over the array of microimages or image elements; and wherein preferably either:

the first pattern defines an array of microimages and the array of focussing elements has a pitch different from a pitch of the array of microimages and/or the array of focussing elements are provided in rotational misalignment with the array of microimages such that the focussing elements display a synthetically magnified version of the array of microimages owing to the moiré effect; or
the first pattern defines an array of image elements, the image elements being arranged based on a repeating unit cell arranged on a regular grid in at least one dimension, the unit cell defining a set of image element positions therewithin, each image element position within the unit cell carrying an image element of a respective corresponding image and the array of focussing elements are provided with a periodicity substantially the same as, or an integral multiple of, a periodicity of the regular grid such that, depending on the viewing angle, the array of focusing elements directs light from selected image element positions to the viewer, such that as the device is tilted different ones of the respective images are displayed by the image elements at the selected image element positions in combination, sequentially.

**14.** A method according to any of the preceding claims, wherein the plasmonic nanostructure elements of the array of plasmonic nanostructure elements each have lateral dimensions of between 50 and 250 nm, preferably between 80 and 220 nm, and/or wherein the array of plasmonic nanostructure elements comprises one or more of: a two-dimensional array of nanopillars, the tops of the nanopillars defining the raised portions of the first surface and the areas between the nanopillars defining the recessed portions of the first surface; and a two-dimensional array of nanoholes, the base of the nanoholes defining the recessed portions of the first surface and the areas between the nanoholes defining the raised portions of the first surface.

**15.** A security device component comprising:

a dielectric substrate, the substrate having a first surface defining a relief structure, wherein the relief structure comprises an array of plasmonic nanostructure elements, the array of plasmonic nanostructure elements defining raised portions and recessed portions of the first surface, and an array of reduced-metallising relief elements, the array of reduced-metallising relief elements defining inclined portions of the first surface having an inclination relative to the plane of the substrate greater than the inclination of the raised portions and/or the recessed portions of the first surface; and
a metal layer deposited on the relief structure, wherein the metal layer coating the raised portions and/or the recessed portions of the of the first surface defined by the array of plasmonic nanostructure elements is thicker than any metal layer coating the inclined portions of the first surface defined by the array of reduced-metallising relief elements, and wherein the plasmonic nanostructure elements and the metal layer, in combination, provide an array of functioning plasmonic nanostructures;
**characterised in that** the inclined portions of the first surface and the directional coating are such that any metal layer coating the inclined portions of the first surface has a thickness of less than 15 nm.

## Patentansprüche

**1.** Verfahren zum Herstellen einer Sicherheitsvorrichtungskomponente, umfassend:

a) Bereitstellen eines dielektrischen Substrats (1), wobei das Substrat eine erste Fläche, die eine Reliefstruktur (20, 30) definiert, wobei die Reliefstruktur ein Array plasmonischer Nanostrukturelemente (21) umfasst, wobei das Array plasmonischer Nanostrukturelemente erhabene Abschnitte (51) und vertiefte Abschnitte (52) der ersten Fläche definiert, und ein Array von Reliefelementen mit reduzierter Metallisierung (31) aufweist, wobei das Array von Reliefelementen mit reduzierter Metallisierung geneigte Abschnitte der ersten Fläche definiert, die eine Neigung relativ zur Ebene des Substrats aufweisen, die größer ist als die Neigung der erhabenen Abschnitte und/oder der vertieften Abschnitte der ersten Fläche;

b) gerichtetes Beschichten der ersten Fläche des Substrats mit einer Metallschicht (50), derart, dass die Metallschicht, die die erhabenen Abschnitte und/oder die vertieften Abschnitte der durch das Array plasmonischer Nanostrukturelemente definierten ersten Fläche beschichtet, dicker ist als jede Metallschichtbeschichtung, die die geneigten Abschnitte (53) der ersten Fläche beschichtet, die durch das Array von Reliefelementen mit reduzierter Metallisierung definiert wird, wobei die plasmonischen Nanostrukturelemente und die Metallschicht in Kombination ein Array funktionierender plasmonischer Nanostrukturen bereitstellen; und

**dadurch gekennzeichnet, dass**

die geneigten Abschnitte der ersten Fläche und die gerichtete Beschichtung derart sind, dass jede Metallschicht, die die geneigten Abschnitte der ersten Fläche beschichtet, eine Dicke von weniger als 15 nm aufweist, und/oder ferner umfassend

c) Ätzen der auf der ersten Fläche beschichteten Metallschicht derart, dass jegliche Metallschicht im Wesentlichen von den geneigten Abschnitten der ersten Fläche entfernt wird und auf den erhabenen Abschnitten und/oder den erhabenen Abschnitten verbleibt, wodurch das Array funktionierender plasmonischer Nanostrukturen erhalten bleibt.

**2.** Verfahren nach Anspruch 1, wobei die geneigten Abschnitte der ersten Fläche und die gerichtete Beschichtung derart sind, dass jede Metallschicht, die die geneigten Abschnitte der ersten Oberfläche beschichtet, zumindest teilweise transparent ist.

**3.** Verfahren nach einem der vorhergehenden Ansprüche, wobei das Bereitstellen des dielektrischen Substrats mit einer ersten, eine Reliefstruktur definierenden Fläche Folgendes umfasst:

a) i) Bereitstellen einer Schicht aus dielektrischem Material;

a) ii) Bilden einer ersten Fläche des dielektrischen Materials, um das Array plasmonischer Nanostrukturelemente und das Array von Reliefelementen mit reduzierter Metallisierung zu definieren, wobei bevorzugt:

die Schicht aus dielektrischem Material thermoformbar ist und das Bilden der ersten Fläche des dielektrischen Materials das Thermoprägen des Arrays plasmonischer Nanostrukturelemente und des Arrays von Reliefelementen mit reduzierter Metallisierung in die erste Fläche des dielektrischen Materials umfasst, und wobei das Array plasmonischer Nanostrukturelemente und das Array von Reliefelementen mit reduzierter Metallisierung bevorzugt im selben Thermoprägeschritt thermogeprägt werden; oder

es sich bei der Schicht aus dielektrischem Material um eine Schicht aus härtbarem dielektrischem Material handelt und wobei das Bilden der ersten Fläche des dielektrischen Materials das Gießen des Arrays plasmonischer Nanostrukturelemente und des Arrays von Reliefelementen mit reduzierter Metallisierung in die erste Fläche des härtbaren dielektrischen Materials umfasst, und Härten des härtbaren dielektrischen Materials, um die Reliefstruktur in der ersten Fläche des dielektrischen Materials zu fixieren, und wobei das Array plasmonischer Nanostrukturelemente und das Array von Reliefelementen mit reduzierter Metallisierung bevorzugt im selben Gussschritt gegossen werden.

**4.** Verfahren nach einem der vorhergehenden Ansprüche, wobei das Array von Reliefelementen mit reduzierter Metallisierung ein eindimensionales Array von länglichen Elementen umfasst, wobei die länglichen Elemente einen im Wesentlichen dreieckigen oder konvexen Querschnitt haben, und/oder wobei das Array von Reliefelementen mit reduzierter Metallisierung ein zweidimensionales Array von im Wesentlichen konischen oder pyramidenförmigen Flächenelementen umfasst.

**5.** Verfahren nach einem der vorhergehenden Ansprüche, wobei eine Richtung der gerichteten Beschichtung im Wesentlichen senkrecht zur Ebene des Substrats ist.

**6.** Verfahren nach einem der vorstehenden Ansprüche, ferner umfassend:

d) Aufbringen einer Deckschicht über dem dielektrischen Substrat, derart, dass eine Fläche der Deckschicht, die der dielektrischen Schicht am nächsten liegt, der Reliefstruktur entspricht, die durch mindestens das Array von Reliefelementen mit reduzierter Metallisierung definiert ist, wobei vorzugsweise das dielektrische Substrat und die Deckschicht aus im Wesentlichen transparenten Materialien gebildet sind und wobei die Deckschicht einen Brechungsindex aufweist, der innerhalb von 0,1, bevorzugt innerhalb von 0,05, eines Brechungsindex des dielektrischen Substrats liegt, bevorzugt derart, dass die Reliefelemente mit reduzierter Metallisierung einen nicht sichtbaren Effekt erzeugen.

**7.** Verfahren nach einem der vorhergehenden Ansprüche, wobei das Array plasmonischer Nanostrukturelemente über einen ersten Bereich hinweg gemäß einem ersten Muster bereitgestellt ist, derart, dass das Array funktionsfähiger plasmonischer Nanostrukturen das erste Muster in Reflexion aufweist, wobei vorzugsweise die plasmonischen Nanostrukturelemente des Arrays plasmonischer Nanostrukturelemente in mindestens einem aus ihrer Form, ihrer Größe und ihrem Abstand über den ersten Bereich variieren, um eine Farbvariation des ersten Musters bereitzustellen, und wobei vorzugsweise das Array von Reliefelementen mit reduzierter Metallisierung das erste Muster zumindest teilweise begrenzt und/oder das Array von Reliefelementen mit reduzierter Metallisierung einen Rand bildet, der das erste Muster zumindest teilweise umgibt.

**8.** Verfahren nach Anspruch 7, wobei das Array plasmonischer Nanostrukturelemente über ein Array erster Unterregionen hinweg bereitgestellt ist und/oder wobei das Array von Reliefelementen mit reduzierter Metallisierung über ein Array zweiter Unterregionen hinweg bereitgestellt ist, wobei die plasmonischen Nanostrukturelemente des Arrays plasmonischer Nanostrukturelemente in mindestens einem von ihrer Form, ihrer Größe und ihrem Abstand über mindestens einige der ersten Unterbereiche hinweg variieren, um eine Farbvariation des ersten Musters bereitzustellen.

**9.** Verfahren nach Anspruch 8, wobei das Anordnung des Arrays der ersten Unterbereiche das erste in Reflexion sichtbare Muster definiert und das Anordnungsarray der zweiten Unterbereiche ein zweites Muster definiert, wobei das zweite Muster aufgrund der Metallschicht, die in den ersten Unterbereichen mit einer Dicke erhalten bleibt, die größer ist als jede Metallschicht in den zweiten Unterbereichen, in Transmission dargestellt ist, wobei das erste Muster eine mehrfarbige Version des zweiten Musters ist oder wobei das erste Muster eine von einer Form des zweiten Musters verschiedene Form aufweist.

**10.** Verfahren nach einem der Ansprüche 7 bis 9, wobei das erste Muster ein erstes Bild definiert, das bevorzugt für die Ansicht in Reflexion mit dem bloßen Auge konfiguriert ist.

**11.** Verfahren nach einem der Ansprüche 7 bis 9, wobei das erste Muster eines Arrays von Mikrobildern oder Bildelementen definiert, derart, dass das Array funktionierender plasmonischer Nanostrukturen das Array von Mikrobildern oder Bildelementen in Reflexion darstellt, wobei bevorzugt das erste Muster ein Array von Mikrobildern oder Bildelementen definiert und wobei die plasmonischen Nanostrukturelemente des Arrays plasmonischer Nanostrukturelemente in mindestens einem von ihrer Form, ihrer Größe und ihrem Abstand über das Array von Mikrobildern oder Bildelementen hinweg variieren, derart dass Mikrobilder oder Bildelemente über das Array von Mikrobildern oder Bildelementen hinweg in der Farbe variieren, und/oder wobei die plasmonischen Nanostrukturelemente des Arrays plasmonischer Nanostrukturelemente in mindestens einem von ihrer Form, ihrer Größe und ihrem Abstand über mindestens eines der Mikrobilder oder Bildelemente hinweg variieren, derart, dass das mindestens eine der Mikrobilder oder Bildelemente ein mehrfarbiges Mikrobild oder Bildelement ist.

**12.** Verfahren nach Anspruch 11, wobei das erste Muster ein Array von Mikrobildern definiert und wobei das Array plasmonischer Nanostrukturelemente oder das Array von Reliefelementen mit reduzierter Metallisierung jedes Bildelement des Arrays von Mikrobildern entweder positiv oder negativ definiert.

**13.** Verfahren nach Anspruch 11 oder Anspruch 12, ferner umfassend:

e) Bereitstellen eines Arrays von Fokussierungselementen über das Array von Mikrobildern oder Bildelementen hinweg; und wobei bevorzugt entweder
das erste Muster ein Array von Mikrobildern definiert und das Array von Fokussierungselementen einen Abstand aufweist, der sich von einem Abstand des Arrays von Mikrobildern unterscheidet, und/oder das Array von Fokussierungselementen in einer Rotationsfehlausrichtung mit dem Array von Mikrobildern bereitgestellt ist, derart, dass die Fokussierungselemente aufgrund des Moire-Effekts eine synthetisch vergrößerte Version des Arrays von Mikrobildern anzeigen; oder
das erste Muster definiert ein Array von Bildelementen, wobei die Bildelemente auf der Grundlage einer sich wiederholenden Zelleneinheit angeordnet sind, die auf einem regelmäßigen Gitter in mindestens einer Dimension angeordnet ist, wobei die Zelleneinheit einen Satz von Bildelementpositionen darin definiert, wobei jede Bildelementposition innerhalb der Zelleneinheit, die ein Bildelement eines jeweils entsprechenden Bildes trägt, und das Array von Fokussierungselementen mit einer Periodizität versehen sind, die im Wesentlichen gleich einer Periodizität des regelmäßigen Gitters ist oder einem ganzzahligen Vielfachen davon entspricht, derart, dass das Array von Fokussierungselementen abhängig vom Betrachtungswinkel Licht von ausgewählten Bildelementpositionen zum Betrachter lenkt, derart, dass beim Neigen des Geräts verschiedene der jeweiligen Bilder von den Bildelementen an den ausgewählten Bildelementpositionen in Kombination nacheinander angezeigt werden.

**14.** Verfahren nach einem der vorhergehenden Ansprüche, wobei die plasmonischen Nanostrukturelemente des Arrays plasmonischer Nanostrukturelemente jeweils laterale Abmessungen zwischen 50 und 250 nm, bevorzugt zwischen 80 und 220 nm, aufweisen und/oder wobei das Array plasmonischer Nanostrukturelemente eines oder mehrere umfasst aus: einem zweidimensionalen Array von Nanosäulen, wobei die Oberseiten der Nanosäulen die erhabenen Abschnitte der ersten Fläche definieren und die Bereiche zwischen den Nanosäulen die vertieften Abschnitte der ersten Fläche definieren; und einem zweidimensionalen Array von Nanolöchern, wobei die Basis der Nanolöcher die vertieften Abschnitte der ersten Fläche definiert und die Bereiche zwischen den Nanolöchern die erhabenen Abschnitte der ersten Fläche definieren.

**15.** Sicherheitsvorrichtungskomponente umfassend:

ein dielektrisches Substrat, wobei das Substrat eine erste Fläche aufweist, die eine Reliefstruktur definiert, wobei die Reliefstruktur ein Array plasmonischer Nanostrukturelemente umfasst, wobei das Array plasmonischer Nanostrukturelemente erhabene Abschnitte und vertiefte Abschnitte der ersten Fläche definiert, und ein Array von Reliefelementen mit reduzierter Metallisierung, wobei das Array von Reliefelementen mit reduzierter Metallisierung geneigte Abschnitte der ersten Fläche definiert, die eine Neigung relativ zur Ebene des Substrats aufweisen, die größer ist als die Neigung der erhabenen Abschnitte und/oder der vertieften Abschnitte der ersten Fläche; und

eine auf der Reliefstruktur abgeschiedene Metallschicht, wobei die Metallschicht, die die erhabenen Abschnitte und/oder die vertieften Abschnitte der durch das Array plasmonischer Nanostrukturelemente definierten ersten Fläche beschichtet, dicker ist als jede Metallschichtbeschichtung, die die geneigten Abschnitte der ersten Fläche beschichtet, die durch das Array von Reliefelementen mit reduzierter Metallisierung definiert wird, und wobei die plasmonischen Nanostrukturelemente und die Metallschicht in Kombination ein Array funktionierender plasmonischer Nanostrukturen bereitstellen;

**dadurch gekennzeichnet, dass** die geneigten Abschnitte der ersten Fläche und die gerichtete Beschichtung derart sind, dass jede Metallschicht, die die geneigten Abschnitte der ersten Fläche beschichtet, eine Dicke von weniger als 15 nm aufweist.

**Revendications**

**1.** Procédé de fabrication d'un composant d'un dispositif de sécurité comprenant :

a) la fourniture d'un substrat diélectrique (1), le substrat présentant une première surface définissant une structure en relief (20, 30), dans lequel la structure en relief comprend un réseau d'éléments de nanostructure plasmonique (21), le réseau d'éléments de nanostructure plasmonique définissant des parties surélevées (51) et des parties encastrées (52) de la première surface et un réseau d'éléments en relief à métallisation réduite (31), le réseau d'éléments en relief à métallisation réduite définissant des parties inclinées de la première surface présentant une inclinaison par rapport au plan du substrat qui est plus importante que l'inclinaison des parties surélevées et/ou des parties encastrées de la première surface ;

b) le revêtement directionnel de la première surface du substrat avec une couche métallique (50) de telle sorte que la couche métallique recouvrant les parties surélevées et/ou les parties encastrées de la première surface définie par le réseau d'éléments de nanostructure plasmonique soit plus épaisse que n'importe quelle couche métallique recouvrant les parties inclinées (53) de la première surface définie par le réseau d'éléments en relief à métallisation réduite, dans lequel les éléments de nanostructure plasmonique et la couche métallique fournissent en combinaison un réseau de nanostructures plasmoniques fonctionnelles ; et

**caractérisé en ce que**

les parties inclinées de la première surface et le revêtement directionnel sont tels que n'importe quelle couche métallique recouvrant les parties inclinées de la première surface présente une épaisseur inférieure à 15 nm ; et/ou comprenant en outre

c) la gravure de la couche métallique recouverte sur la première surface de telle sorte que n'importe quelle couche métallique soit sensiblement retirée des parties inclinées de la première surface et reste sur les parties surélevées et/ou les parties encastrées, ce qui permet de garder le réseau de nanostructures plasmoniques fonctionnelles.

**2.** Procédé selon la revendication 1, dans lequel les parties inclinées de la première surface et le revêtement directionnel sont tels que n'importe quelle couche métallique recouvrant les parties inclinées de la première surface soit au moins partiellement transparente.

**3.** Procédé selon l'une quelconque des revendications précédentes, dans lequel la fourniture du substrat diélectrique présentant une première surface définissant une structure en relief comprend :

a) i) la fourniture d'une couche de matériau diélectrique ;
a) ii) la formation d'une première surface du matériau diélectrique de sorte à définir le réseau d'éléments de nanostructure plasmonique et le réseau d'éléments en relief à métallisation réduite, dans lequel, de préférence, soit :

la couche de matériau diélectrique est thermoformable et la formation de la première surface du matériau diélectrique comprend le thermogaufrage du réseau d'éléments de nanostructure plasmonique et du réseau d'éléments en relief à métallisation réduite dans la première surface du matériau diélectrique et, de préférence, le réseau d'éléments de nanostructure plasmonique et le réseau d'éléments en relief à métallisation réduite sont thermogaufrés dans la même étape de thermogaufrage ; soit
la couche de matériau diélectrique est thermoformable est une couche de matériau diélectrique durcissable et dans lequel la formation de la première surface du matériau diélectrique comprend le moulage du réseau d'éléments de nanostructure plasmonique et du réseau d'éléments en relief à métallisation réduite dans la première surface du matériau diélectrique durcissable et le durcissement du matériau diélectrique durcissable de sorte à fixer la structure en relief dans la première surface du matériau diélectrique et, de préférence, le réseau d'éléments de nanostructure plasmonique et le réseau d'éléments en relief à métallisation réduite sont moulés dans la même étape de moulage.

**4.** Procédé selon l'une quelconque des revendications précédentes, dans lequel le réseau d'éléments en relief à métallisation réduite comprend un réseau unidimensionnel d'éléments allongés, les éléments allongés étant sensiblement triangulaires ou convexes en coupe transversale et/ou dans lequel le réseau d'éléments en relief à métallisation réduite comprend un réseau bidimensionnel d'éléments de surface sensiblement coniques ou pyramidaux.

**5.** Procédé selon l'une quelconque des revendications précédentes, dans lequel une direction du revêtement directionnel est sensiblement perpendiculaire au plan du substrat.

**6.** Procédé selon l'une quelconque des revendications précédentes, comprenant en outre :
d) l'application d'une couche de recouvrement sur le substrat diélectrique de telle sorte qu'une surface de la couche de recouvrement la plus proche de la couche diélectrique soit conforme à la structure en relief définie par au moins le réseau d'éléments en relief à métallisation réduite, dans lequel, de préférence, le substrat diélectrique et la couche de recouvrement sont formés de matériaux sensiblement transparents et dans lequel la couche de recouvrement présente un indice de réfraction dans les 0,1, de préférence dans les 0,05 d'un indice de réfraction du substrat diélectrique, de préférence de telle sorte que les éléments en relief à métallisation réduite génèrent un effet non visible.

**7.** Procédé selon l'une quelconque des revendications précédentes, dans lequel le réseau d'éléments de nanostructure plasmonique est disposé à travers une première région selon un premier motif de telle sorte que le réseau de nanostructures plasmoniques fonctionnelles montre le premier motif en réflexion, dans lequel, de préférence, les éléments de nanostructure plasmonique du réseau d'éléments de nanostructure plasmonique varient dans au moins l'un de leur forme, de leur taille et de leur espacement à travers la première région pour fournir une variation de couleur du premier motif et dans lequel, de préférence, le réseau d'éléments en relief à métallisation réduite délimite au moins partiellement le premier motif et/ou le réseau d'éléments en relief à métallisation réduite forme un bord entourant au moins partiellement le premier motif.

**8.** Procédé selon la revendication 7, dans lequel le réseau d'éléments de nanostructure plasmonique est disposé à travers un réseau de premières sous-régions et/ou dans lequel le réseau d'éléments en relief à métallisation réduite est disposé à travers un réseau de secondes sous-régions, dans lequel, de préférence, les éléments de nanostructure plasmonique du réseau d'éléments de nanostructure plasmonique varient dans au moins l'un de leur forme, de leur taille et de leur espacement à travers au moins certaines des premières sous-régions pour fournir une variation de couleur du premier motif.

**9.** Procédé selon la revendication 8, dans lequel l'agencement du réseau de premières sous-régions définit le premier motif visible en réflexion et l'agencement du réseau de secondes sous-régions définit un second motif, le second motif étant montré en transmission due à la couche métallique qui est retenue dans les premières sous-régions avec une épaisseur plus importante que celle de n'importe quelle couche métallique dans les secondes sous-régions, dans lequel le premier motif est une version multicolore du second motif ou dans lequel le premier motif présente une forme différente d'une forme du seconde motif.

**10.** Procédé selon l'une quelconque des revendications 7 à 9, dans lequel le premier motif définit une première image, de préférence qui est configurée pour être vue en réflexion par l'oeil nu.

**11.** Procédé selon l'une quelconque des revendications 7 à 9, dans lequel le premier motif définit un réseau de microimages ou d'éléments d'image de telle sorte que le réseau de nanostructures plasmoniques fonctionnelles montre le réseau de microimages ou d'éléments d'image en réflexion, dans lequel, de préférence, le premier motif définit un réseau de microimages ou d'éléments d'image ; et dans lequel les éléments de nanostructure plasmonique du réseau d'éléments de nanostructure plasmonique varient dans au moins l'un de leur forme, de leur taille et de leur espacement à travers le réseau de microimages ou d'éléments d'image et/ou dans lequel les éléments de nanostructure plasmonique du réseau d'éléments de nanostructure plasmonique varient dans au moins l'un de leur forme, de leur taille et de leur espacement à travers au moins l'une des microimages ou au moins l'un des éléments d'image de telle sorte que ladite au moins une des microimages, ou au moins un des éléments d'image, est une microimage, ou un élément d'image, multicolore.

**12.** Procédé selon la revendication 11, dans lequel le premier motif définit un réseau de microimages et dans lequel le réseau d'éléments de nanostructure plasmonique ou le réseau d'éléments en relief à métallisation réduite définit soit positivement, soit négativement chaque élément d'image du réseau de microimages.

**13.** Procédé selon la revendication 11 ou la revendication 12, comprenant en outre :
e) la fourniture d'un réseau d'éléments de focalisation sur le réseau de microimages ou d'éléments d'image ; et dans lequel de préférence, soit :

le premier motif définit un réseau de microimages et le réseau d'éléments de focalisation présente un pas différent d'un pas du réseau de microimages et/ou le réseau d'éléments de focalisation est disposé en défaut d'alignement en rotation avec le réseau de microimages de telle sorte que les éléments de focalisation affichent une version synthétiquement agrandie du réseau de microimages due au moiré ; soit
le premier motif définit un réseau d'éléments d'image, les éléments d'image étant agencés sur la base d'une cellule d'unité de répétition agencée sur une grille régulière dans au moins une dimension, la cellule d'unité définissant un ensemble de positions d'élément d'image dans celle-ci, chaque position d'élément d'image dans la cellule d'unité comportant un élément d'image d'une image correspondante respective et le réseau d'éléments de focalisation est pourvu d'une périodicité sensiblement la même qu'une périodicité, ou d'un multiple entier de celle-ci, de la grille régulière de telle sorte que, en fonction de l'angle de visualisation, le réseau d'éléments de focalisation dirige de la lumière à partir de positions d'élément d'image sélectionnées vers le spectateur de telle sorte qu'au fur et à mesure que le dispositif est incliné, différentes images des images respectives soient affichées par les éléments d'image aux positions d'élément d'image sélectionnées en combinaison, de manière séquentielle.

**14.** Procédé selon l'une quelconque des revendications précédentes, dans lequel les éléments de nanostructure plasmonique du réseau d'éléments de nanostructure plasmonique présentent chacun des dimensions latérales d'entre 50 et 250 nm, de préférence entre 80 et 220 nm et/ou dans lequel le réseau d'éléments de nanostructure plasmonique comprend un ou plusieurs : d'un réseau bidimensionnel de nanopiliers, les sommets des nanopiliers définissant les parties surélevées de la première surface et les zones entre les nanopiliers définissant les parties encastrées de la première surface ; et un réseau bidimensionnel de nanotrous, la base des nanotrous définissant les parties encastrées de la première surface et les zones entre les nanotrous définissant les parties surélevées de la première surface.

**15.** Composant de dispositif de sécurité comprenant :

un substrat diélectrique, le substrat présentant une première surface définissant une structure en relief, dans lequel la structure en relief comprend un réseau d'éléments de nanostructure plasmonique, le réseau d'éléments de nanostructure plasmonique définissant des parties surélevées et des parties encastrées de la première surface et un réseau d'éléments en relief à métallisation réduite, le réseau d'éléments en relief à métallisation réduite définissant des parties inclinées de la première surface présentant une inclinaison par rapport au plan du substrat qui est plus importante que l'inclinaison des parties surélevées et/ou des parties encastrées de la première surface ; et
une couche métallique déposée sur la structure en relief, dans lequel la couche métallique recouvrant les parties surélevées et/ou les parties encastrées de la première surface définie par le réseau d'éléments de nanostructure plasmonique soit plus épaisse que n'importe quelle couche métallique recouvrant les parties inclinées de la première surface définie par le réseau d'éléments en relief à métallisation réduite, et dans lequel les éléments de nanostructure plasmonique et la couche métallique fournissent en combinaison un réseau de nanostructures plasmoniques fonctionnelles ;
**caractérisé en ce que** les parties inclinées de la première surface et le revêtement directionnel sont tels que n'importe quelle couche métallique recouvrant les parties inclinées de la première surface présente une épaisseur inférieure à 15 nm.

Fig. 1A

1000
1003
1200
1050
20

Fig. 1B

1003
1002
1050
1001
1000

Fig. 2A
1003
1002
1001
1050A
A B C D E F G A B C D E F G A B C D E F G
1051

Fig. 2B
1051
1050A
1050G
A B C D E F G A B C D E F G A B C D E F G

Fig. 2C
A B C D E F G

Fig. 3A

1003
1050A
1050B
1051
1002

Fig. 3B

1051
1050A
1050B
1050C
1050D

Fig. 4A

10
1

Fig. 4B

200
230
220
230

10
1

Fig. 4C

200
10
1
210

Fig. 4D

30
20
30
10
1

Fig. 4E

250
10
1
50

Fig. 4F

51
21
21
53
31
31
21
31
52
50

Fig. 4G

51
21
31
52
50

Fig. 5A

21

Fig. 5B

31

Fig. 6

30
20
30
100
51
2
1
10
50

Fig. 7A
100
30
20

Fig. 7B
20
51
52
21

Fig. 8A
100
20B
30
20A

Fig. 8B
20A
20B
21A
21B

Fig. 9A

200
230
240
220
240
230

10
1

Fig. 9B

30
40
20
40
30
31
21
10
1

Fig. 9C

250
10
1
50

Fig. 9D

20
40
30
51
31
21
54
53
52
50

Fig. 9E

51
21
54
31
52
50

Fig. 10

100
40
30
20

Fig. 11A

150
20
30

Fig. 11B

1000
3
20
30
2
10
1
150

Fig. 12

Fig. 13A

21′
50
10

Fig. 13B

52′
21′
50
51′
10

Fig. 14A

10
1

Fig. 14B

200
10
1
220

Fig. 14C

200
10
1
210

Fig. 14D

20
21
10
1

Fig. 14E

250
21
50
1

Fig. 14F

51
50
21
52

Fig. 15A

60
10
1

Fig. 15B

302
360
300
301
10
1
61
62
61

Fig. 15C

61
61
50
10
1
21

Fig. 15D

61
61
50
60
10
1
21

Fig. 15E

20
25
20
50
10
1
21

Fig. 16

100
20
25

Fig. 17A

302
360
300
301
61′
62′
61′
60′
50
10
1

Fig. 17B

62′
21
10
1

Fig. 17C

25
20
25
10
2
1
21
50

Fig. 18

100
25
20

Fig. 19

100
25
20
25
10
2
70
1
21

Fig. 20

100
25
20

Fig. 21A

3
100
51
10
70
2
1
21
50
20
25

Fig. 21B

Fig. 21C

10
70

Fig. 21D

20
25
20
25
20
25
70

Fig. 21E

Fig. 21F

Fig. 22

150
20A
20A
20B
20C
20D

Fig. 23A

150′

Fig. 23B

150′
150′
50
21
10
21
21
1

Fig. 23C

150
151
152
£5 £5 £5 £5
£5 £5 £5 £5
£5 £5 £5 £5
£5 £5 £5 £5

Fig. 24A

150′
150R′
150G′
150B′
150′

Fig. 24B

150′
50
21R
10
21G
21B

Fig. 24C

300
302
301

Fig. 24D

20R
20G
20B
20R
20B
20G
150'

Fig. 25

10
51
55

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3255468 A1
- EP 1695121 A
- WO 9427254 A
- WO 2011107782 A
- WO 2011107783 A
- US 4892336 A
- WO 2011051669 A
- WO 2011051670 A
- WO 2012027779 A
- US 6856462 B
- WO 2015011493 A
- WO 2015011494 A
- US 6483644 A
- EP 0059056 A1
- EP 0860298 A2
- WO 03095188 A2
- WO 8300659 A1
- WO 0039391 A1
- WO 03054297 A2
- WO 200039391 A1


### Non-patent literature cited in the description


- **SHAWN J. TAN et al.** Plasmonic Color Palettes for Photorealistic Printing with Aluminum Nanostructures. *Nano Letters,* 2014, vol. 14 (7), 4023-4029
- **YINGHONG GU et al.** Color generation via subwavelenght plasmonic nanostructures. *Nanoscale,* 2015, vol. 7, 6409-6419
- **ANDERS KRISTENSEN et al.** Plasmonic colour generation. *Nat. Rev. Mater.,* 2016, vol. 2 (16088), 1-14